(19)

Europäisches Patentamt

European Patent Office

Office européen des brevets

(11) **EP 4 193 763 B1**

(12) **EUROPEAN PATENT SPECIFICATION**

(45) Date of publication and mention
of the grant of the patent:
**08.10.2025 Bulletin 2025/41**

(21) Application number: **21755777.6**

(22) Date of filing: **06.08.2021**

(51) International Patent Classification (IPC):
**H04W 72/23** (2023.01)    H04W 72/0453 (2023.01)
**H04W 88/06** (2009.01)

(52) Cooperative Patent Classification (CPC):
**H04W 72/23; H04W 72/0453; H04W 72/1215;
H04W 88/06**

(86) International application number:
**PCT/EP2021/072021**

(87) International publication number:
**WO 2022/029297 (10.02.2022 Gazette 2022/06)**

(54) **SCHEDULING TECHNIQUE FOR MULTIPLE CELLS**

PLANUNGSTECHNIK FÜR MEHRERE ZELLEN

TECHNIQUE DE PLANIFICATION POUR DE MULTIPLES CELLULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.08.2020   US 202063063075 P**

(43) Date of publication of application:
**14.06.2023  Bulletin 2023/24**

(73) Proprietor: **Telefonaktiebolaget LM Ericsson
(publ)
164 83 Stockholm (SE)**

(72) Inventors:
• **WANG, Zhanxian
183 65 Täby (SE)**
• **ERSBO, Petter
741 42 Knivsta (SE)**

• **BALDEMAIR, Robert
170 69 Solna (SE)**
• **NIMBALKER, Ajit
Fremont, California 94538 (US)**
• **NORY, Ravikiran
San José, California 95134 (US)**
• **ZOU, Zhenhua
171 42 Solna (SE)**

(74) Representative: **Ericsson
Patent Development
Torshamnsgatan 21-23
164 80 Stockholm (SE)**

(56) References cited:
**CA-A1- 3 098 949      US-A1- 2016 374 082
US-A1- 2019 394 759**

EP 4 193 763 B1

**Description**

**Technical Field**

The present disclosure relates to a technique for scheduling for multiple cells. More specifically, and without limitation, methods and devices are provided for communicating scheduling information between a radio device and a network node of a radio access network, which is in radio communication with the radio device through at least two cells.

**Background**

While the frequency domain of Fifth Generation New Radio (5G NR) as specified by the Third Generation Partnership Project (3GPP) is configured similarly to 3GPP Long Term Evolution (LTE), the time domain of 5G NR is more flexible.

This flexibility in scheduling requires more control signaling. Currently, the time domain resource assignment (TDRA) field in downlink control information (DCI) can be 0, 1, 2, 3, or 4 bits (e.g. in DCI format 1-1) or 4 bits (e.g. in DCI 1-0). Thus, using a single DCI to schedule 2 cells, a size of the TDRA field would linearly increase with number of cells, resulting in up to 8 bits for two cells. Similarly, there are other DCI fields such as 'Rate matching indicator' and 'ZP CSI-RS trigger', which are repeated for both cells, leading to an increased size of the DCI and degraded performance.

US 2013/374032 A1 teaches controlling signaling in advanced wireless communication networks and systems. US 2019/394739 A1 teaches user equipment, base stations and methods for time-domain resource allocation. CA 3 093 949 A1 teaches a parameter determining method, a monitoring method, and a communications apparatus.

**Summary**

Accordingly, there is a need for a scheduling technique that allows scheduling multiple cells more efficiently.

The claimed scope of the present invention is defined in the appended claims. Other embodiments, which are not covered by the claims, are present in the following description as background art useful for understanding the present invention.

As to a first method aspect, a method of receiving scheduling information at a radio device from a network node of a radio access network (RAN) in radio communication with the radio device through at least two cells is provided. The method comprises or initiates a step of receiving configuration information from the network node, the configuration information being indicative of at least one table comprising at least two alternatives of the scheduling information for each of the at least two cells. The method further comprises or initiates a step of receiving control information from the network node, the control information being indicative of a reference to one of the at least two alternatives of the scheduling information for each of the at least two cells.

At least some embodiments can provide a way to reduce the size of the control information (e.g., DCI size) by allowing a single DCI to jointly schedule (e.g., control or configure) the at least two cells (i.e., multiple cells). By creating the at least one table (e.g., a higher layer RRC configuration IE) to set default values for each scheduling PDSCH, the reference in the control information (e.g., the DCI bits) are sufficient to indicate the configuration jointly for each of the at least two cells.

Any embodiment may allow a single DCI to schedule multiple cells without dramatically increase the DCI size. In one embodiment, 3 DCI fields are listed in the at least one table to be configure jointly. The 3 DCI fields are 'rate matching indicator', 'ZP-CSI-RS triggering' and 'Time domain resource allocation list'. In another embodiment, 2 different methods are disclosed to reduce DCI payload size from 4 bits for 2 carriers (or cells) in total to 3 bits and 8 bits for 2 carriers (or cells) in total to less than 8 bits.

The method may be implemented as a method of single-DCI scheduling for multiple cells using a joint configuration.

A single DCI as the control information may jointly schedule multiple cells, optionally using cross-carrier scheduling. Alternatively or in addition, an Scell may schedule a Pcell. The cells may use different numerology. The DCI size may be reduced compared to a mere repetition of the DCI for each of the cells.

The at least two cells or the RAN being in the radio communication with the radio device may comprise the at least two cells or the RAN providing radio access to the radio device.

A single control information from the network node, e.g., a single reference in the control information, may be indicative of one of the alternatives of the scheduling information for each of the at least two cells. As a result, the single control information, e.g., the single reference, can be indicative of the scheduling information for each of the at least two cells. The scheduling information for each of the at least two cells may comprise different scheduling information for different cells of the at least two cells.

The reference may also be implemented as a code point of the control information, e.g., a DCI code point.

Alternatively or in addition, the reference may be comprised in a field of the control information, e.g., a DCI field.

Receiving scheduling information by means of the at least one table comprising the alternatives of the scheduling information for each of the at least two cells and by means of the control information indicative of the reference to the at least one table may also be referred to as multi-cell scheduling. The method may further comprise a step of determining the scheduling information for each of the at least two cells by applying the reference indicated in the control information to the at least one table indicated in the control information.

Whenever referring to a column and/or a row of a table, the expressions column and row may be interchanged. Alternatively or in addition, the at least two alternatives of the scheduling information may also be implemented as at least two instances of the scheduling information or at least two rows of the scheduling information in the at least one table. For example, the "alternatives" may be "rows".

Herein, any "cell" may be or may encompass a carrier or a component carrier. Furthermore, the network node may provide the radio communication (e.g., the radio access) in at least one of the at least two cells. For example, at least another one of the at least two cells may be provided by a further network node of the RAN. Alternatively, the network node may provide the radio communication (e.g., the radio access) in each of the at least two cells.

The reference (e.g., according to the first and/or second method aspect) may be a row index indicative of a row of the at least one table.

The reference may be the row index indicative of a row of each of the at least one table. For example, each of the at least one table may comprise an index column. The reference may be a reference to the row of each the at least one table, which comprises the row index in the index column.

The at least one table (e.g., according the first and/or method aspect may comprise a first table comprising the at least two alternatives of the scheduling information for a first cell of the at least two cells. The reference to the one of the at least two alternatives of the scheduling information in the first table may be indicative of the scheduling information of the first cell. The at least one table according the first method aspect may further comprise a second table comprising the at least two alternatives of the scheduling information for a second cell of the at least two cells. The reference to the one of the at least two alternatives of the scheduling information in the second table may be indicative of the scheduling information of the second cell.

Receiving the control information may comprise or trigger applying the reference to the first table to determine or apply the scheduling information of the first cell. Alternatively or in addition, receiving the control information may comprise or trigger applying the (e.g., same) reference to the second table to determine or apply the scheduling information of the second cell. Each of the first and second tables may comprise the column index for determining the row comprising the scheduling information of the first and second cell, respectively.

One table of the at least one table (e.g., according to the first and/or second method aspect) may comprise a first column comprising the at least two alternatives of the scheduling information for a first cell of the at least two cells. The reference to the one of the at least two alternatives of the scheduling information in the first column may be indicative of the scheduling information of the first cell. One table of the at least one table (e.g., according to the first and/or second method aspect) may further comprise a second column comprising the at least two alternatives of the scheduling information for a second cell of the at least two cells. The reference to the one of the at least two alternatives of the scheduling information in the second column may be indicative of the scheduling information of the second cell.

Receiving the control information may comprise or trigger applying the reference to the one table to determine or apply the scheduling information of each of the first cell and the second cell. The one table may comprise the column index for determining the row comprising the scheduling information of each of the first and second cell.

The at least one table (e.g., according to the first and/or second method aspect) may comprise a reference table for mapping the reference of the control information to a first reference and a second reference. Alternatively or in addition, the at least one table (e.g., according to the first and/or second method aspect) may comprise a first table comprising the at least two alternatives of the scheduling information for a first cell of the at least two cells. The first reference may determine the one of the at least two alternatives of the scheduling information in the first table as the scheduling information of the first cell. Alternatively or in addition, the at least one table (e.g., according to the first and/or second method aspect) may comprise a second table comprising the at least two alternatives of the scheduling information for a second cell of the at least two cells. The second reference may determine the one of the at least two alternatives of the scheduling information in the second table as the scheduling information of the second cell.

Receiving the control information may comprise or trigger applying the reference to the first table to determine and/or apply the scheduling information of the first cell and applying the (e.g., same) reference to the second table to determine and/or apply the scheduling information of the second cell.

The configuration information (e.g., according to the first and/or second method aspect) may comprise at least one allocation list as the at least one table. Alternatively or in addition, the at least two alternatives of the scheduling information comprise at least two alternatives of a resource allocation. Alternatively or in addition, the control information comprises a time domain resource assignment (TDRA) field that may be indicative of the reference.

The configuration information or the allocation list may be a radio resource control, RRC, parameter or RRC information element (IE), e.g., labeled "pdsch-AllocationList". Alternatively or in addition, the resource allocation may be an RRC parameter or RRC IE, e.g., labeled "PDSCH-TimeDomainResourceAllocation". Alternatively or in addition, the control information may comprise one or more fields of downlink control information (DCI), e.g., labeled "Time Domain Resource Assignment" (TDRA). The TDRA field may comprise the reference as an index of the allocation list.

The configuration information (e.g., according to the first and/or second method aspect) may be or may be received in one or more radio resource control (RRC) messages.

The control information (e.g., according to the first and/or second method aspect) may be, or may be received in, one or more downlink control information (DCI) messages. The control information may be received on a physical downlink control channel (PDCCH) of the radio communication.

The scheduling information for each of the at least two cells (e.g., according to the first and/or second method aspect) may be or comprises a resource allocation for each of the at least two cells.

The resource allocation may be a radio resource allocation. The resource allocation may be configured to allocate radio resources for the radio communication.

The resource allocation for each of the at least two cells (e.g., according to the first and/or second method aspect) may be indicative of radio resources of each of the at least two cells in an uplink (UL) of the radio communication and/or on a physical UL shared channel (PUSCH) of the radio communication.

The first method aspect may further comprise or initiate the step of transmitting data, to the at least two cells of the RAN, using the respective radio resources of the at least two cells in an uplink (UL).

A format of the DCI may comprise DCI 0_0 or DCI 0_1 or DCI 0_2 or a variant thereof for the multi-cell scheduling, e.g., referred to as DCI 0_N.

The resource allocation for each of the at least two cells (e.g., according to the first and/or second method aspect) may be indicative of radio resources of each of the at least two cells in a downlink (DL) of the radio communication and/or on a physical DL shared channel (PDSCH) of the radio communication.

The first method aspect may further comprise or initiate the step of receiving data, from the at least two cells of the RAN, on the respective radio resources of the at least two cells in a downlink (DL).

A format of the DCI may comprise DCI 1_0 or DCI 1_1 or DCI 1_2 or a variant thereof for the multi-cell scheduling, e.g., referred to as DCI 1_N.

The resource allocation (e.g., according to the first and/or second method aspect) may be indicative of radio resources in the time domain of the radio communication.

The resource allocation (e.g., according to the first and/or second method aspect) may further be indicative of radio resources of each of the at least two cells of the RAN that overlap in time.

The resource allocation (e.g., according to the first and/or second method aspect) may further be indicative of the radio resources relative to a time slot of the network node in which the control information is received.

The resource allocation (e.g., according to the first and/or second method aspect) may further be indicative of a slot of the radio resources by means of a slot offset relative to a time slot in which the control information is received, and wherein the resource allocation is indicative of a start symbol within the slot of the radio resources and a length of the radio resources in the time domain.

The slot offset may be referred to by k0 or K0 for radio resources in the DL and/or the slot offset may be referred to by k2 or K2 for radio resources in the UL.

The start symbol may be referred to by S. The length of the radio resources (e.g., in terms of a number of symbols) may be referred to by L. The start symbol and the length may be collectively referred to as or indicated by means of a start and length indicator value (SLIV).

The radio resources of the at least two cells of the RAN (e.g., according to the first and/or second method aspect) may be different in at least one of a frequency domain and a spatial domain.

The at least one table (e.g., according to the first and/or second method aspect) may comprise as the at least two alternatives (i) at least two different states or at least two different values of a rate matching indicator and/or (ii) at least two different states or at least two different values of a zero power channel state information reference signal (ZP CSI-RS) trigger as the scheduling information or as part of scheduling information.

The configuration information (e.g., according to the first and/or second method aspect) may comprise different sets of the at least two alternatives of the resource allocation for each of the at least two cells.

The configuration information or the control information or a further control message from the network node (e.g., according to the first and/or second method aspect) may comprise an indicator for selectively enabling and disabling cross-carrier scheduling for the at least two cells or an indicator for selectively enabling and disabling multi-cell scheduling for the at least two cells.

If the indicator is indicative of enabling cross-carrier scheduling for the at least two cells, or the indicator is indicative of enabling multi-cell scheduling for the at least two cells, the radio device may apply the reference in the control information to the at least one table for determining the scheduling information of each of the at least two cells.

The at least two cells (e.g., according to the first and/or second method aspect) may comprise at least one secondary cell (SCell) and further comprise one primary cell (PCell) or one primary secondary cell (PSCell) or one special cell (spCell). The network node may provide (e.g., at least) the PCell or the PSCell or the spCell.

The configuration information and the control information (e.g., according to the first and/or second method aspect) may be received in the PCell or the PSCell or the spCell.

The radio communication with the radio device (e.g., according to the first and/or second method aspect) may comprise a dual connectivity (DC) of the radio device with a master cell group (MCG) and a secondary cell group (SCG) of the RAN, the SCG comprising the at least two cells.

The DC (e.g., according to the first and/or second method aspect) may be a multi-radio access technology (multi-RAT) DC, or briefly: MR-DC. The MCG may provide radio access to the radio device according to Long Term Evolution (LTE) as a primary RAT and the SCG provides radio access to the radio device according to Fifth Generation New Radio (5G NR) as a secondary RAT, or *vice versa.*

The control information (e.g., according to the first and/or second method aspect) may be received on a first layer of a protocol stack of the radio communication and the configuration information is received on a second layer of the protocol stack of the radio communication, the second layer being above the first layer in the protocol stack.

The control information (e.g., according to the first and/or second method aspect) may comprise a single value of the reference. The single value may be indicative of one of the at least two alternatives for each of the at least two cells.

The control information (e.g., according to the first and/or second method aspect) may comprise a bit field or one or more bits as the reference being jointly indicative of one of the at least two alternatives for each of the at least two cells.

As to a second method aspect, a method of transmitting scheduling information to a radio device from a network node of a radio access network (RAN) in radio communication with the radio device through at least two cells is provided. The method comprises or initiates a step of transmitting configuration information to the radio device. The configuration information is indicative of at least one table comprising at least two alternatives of the scheduling information for each of the at least two cells. The method further comprises or initiates a step of transmitting control information to the radio device. The control information is indicative of a reference to one of the at least two alternatives of the scheduling information for each of the at least two cells.

The second method aspect may further comprise any feature and/or any step disclosed in the context of the first method aspect, or a feature and/or step corresponding thereto, e.g., a receiver counterpart to a transmitter feature or step.

As to another aspect, a computer program product is provided. The computer program product comprises program code portions for performing any one of the steps of the first and/or second method aspect disclosed herein when the computer program product is executed by one or more computing devices. The computer program product may be stored on a computer-readable recording medium. The computer program product may also be provided for download, e.g., via the radio network, the RAN, the Internet and/or the host computer. Alternatively, or in addition, the method may be encoded in a Field-Programmable Gate Array (FPGA) and/or an Application-Specific Integrated Circuit (ASIC), or the functionality may be provided for download by means of a hardware description language.

As to a first device aspect, a radio device for receiving scheduling information at a radio device from a network node of a radio access network (RAN) in radio communication with the radio device through at least two cells is provided. The radio device comprises memory operable to store instructions and processing circuitry operable to execute the instructions, such that the radio device is operable to receive configuration information from the network node. The configuration information is indicative of at least one table comprising at least two alternatives of the scheduling information for each of the at least two cells. The radio device is further be operable to receive control information from the network node. The control information may be indicative of a reference to one of the at least two alternatives of the scheduling information for each of the at least two cells.

Furthermore, the first device aspect may be provided or implemented alone or in combination with any one of the embodiments described herein below.

Alternatively or in addition, the device may be configured to perform any one of the steps of the first method aspect.

The radio device according to the first device aspect may be further operable to perform any one of the steps of the first method aspect.

As to a further first device aspect, a radio device for receiving scheduling information at a radio device from a network node of a radio access network (RAN) in radio communication with the radio device through at least two cells is provided. The radio device is configured to receive configuration information from the network node. The configuration information is indicative of at least one table comprising at least two alternatives of the scheduling information for each of the at least two cells. The radio device is further configured to receive control information from the network node. The control information is indicative of a reference to one of the at least two alternatives of the scheduling information for each of the at least two cells.

The radio device according to the further first device aspect may be further configured to perform any one of the steps of first method aspect.

As to a still further first device aspect, a user equipment (UE) for receiving scheduling information at the UE from a network node of a radio access network (RAN) in radio communication with the UE through at least two cells is provided.

The UE may be an embodiment of the first device aspect or the further first device aspect.

As to a second device aspect, a network node for transmitting scheduling information to a radio device from the network node of a radio access network (RAN) in radio communication with the radio device through at least two cells is provided. The network node comprises memory operable to store instructions and processing circuitry operable to execute the instructions, such that the network node is operable to transmit configuration information to the radio device. The configuration information is indicative of at least one table comprising at least two alternatives of the scheduling information for each of the at least two cells. The network node further comprises memory operable to store instructions and processing circuitry operable to execute the instructions, such that the network node is operable to transmit control information to the radio device. The control information is indicative of a reference to one of the at least two alternatives of the scheduling information for each of the at least two cells.

Furthermore, the second device aspect may be provided or implemented alone or in combination with any one of the embodiments described herein below.

Alternatively or in addition, the device may be configured to perform any one of the steps of the second method aspect.

The network node according to the second device aspect may be further operable to perform any one of the steps of the second method aspect.

As to a further second device aspect, a network node for transmitting scheduling information to a radio device from a network node of a radio access network (RAN) in radio communication with the radio device through at least two cells is provided. The network node is configured to transmit configuration information to the radio device. The configuration information is indicative of at least one table comprising at least two alternatives of the scheduling information for each of the at least two cells. The network node is further configured to transmit control information to the radio device. The control information is indicative of a reference to one of the at least two alternatives of the scheduling information for each of the at least two cells.

The network node according to the further second device aspect may further be configured to perform any one of the steps of the second method aspect.

As to a still further second device aspect, a base station for transmitting scheduling information to a radio device from a network node of a radio access network (RAN) in radio communication with the radio device through at least two cells is provided. The base station may be an embodiment of the second device aspect or the further second device aspect.

Without limitation, for example in a 3GPP implementation, any "radio device" may be a user equipment (UE).

The technique may be applied in the context of 3GPP New Radio (NR).

The technique may be implemented in accordance with a 3GPP specification, e.g., for 3GPP release 17. Optionally, the technique may be implemented for 3GPP NR according to a modification of the 3GPP document TS 38.331, version 16.1.0.

In any radio access technology (RAT), the technique may be implemented in combination with a sidelink using proximity services (ProSe), e.g. according to a 3GPP specification.

Any radio device may be a user equipment (UE), e.g., according to a 3GPP specification. The radio device and the RAN may be wirelessly connected in an uplink (UL) and/or a downlink (DL) through a Uu interface.

The radio device and/or the RAN and/or the network node may form, or may be part of, a radio network, e.g., according to the Third Generation Partnership Project (3GPP) or according to the standard family IEEE 802.11 (Wi-Fi). The first method aspect and the second method aspect may be performed by one or more embodiments of the radio device and the RAN (e.g., the network node, e.g., a base station), respectively.

The RAN may comprise one or more base stations (e.g., network nodes), e.g., performing the second method aspect. Alternatively or in addition, the radio network may be a vehicular, *ad hoc* and/or mesh network comprising two or more radio devices, e.g., acting as the radio device (e.g., a relay radio device for a further remote radio device).

Any of the radio devices may be a 3GPP user equipment (UE) or a Wi-Fi station (STA). The radio device may be a mobile or portable station, a device for machine-type communication (MTC), a device for narrowband Internet of Things (NB-IoT) or a combination thereof. Examples for the UE and the mobile station include a mobile phone, a tablet computer and a self-driving vehicle. Examples for the portable station include a laptop computer and a television set. Examples for the MTC device or the NB-IoT device include robots, sensors and/or actuators, e.g., in manufacturing, automotive communication and home automation. The MTC device or the NB-IoT device may be implemented in a manufacturing plant, household appliances and consumer electronics.

Whenever referring to the RAN, the RAN may be implemented by one or more base stations (e.g., network nodes).

The radio device may be wirelessly connected or connectable (e.g., according to a radio resource control, RRC, state or active mode) with the network node and/or each of the at least two cells of the RAN.

The base station (e.g., the network node and/or any of the cells) may encompass or may be implemented by any station that is configured to provide radio access to any of the radio devices. The base stations may also be referred to as cell, carrier, component carrier, transmission and reception point (TRP), radio access node or access point (AP). The base station and/or the radio device may provide a data link to a host computer providing the user data to the radio device or gathering user data from the radio device. Examples for the base stations (e.g., the network node) may include a 3G base station or Node B, 4G base station or eNodeB, a 5G base station or gNodeB, a Wi-Fi AP and a network controller (e.g., according to Bluetooth, ZigBee or Z-Wave).

The RAN may be implemented according to the Global System for Mobile Communications (GSM), the Universal Mobile Telecommunications System (UMTS), 3GPP Long Term Evolution (LTE) and/or 3GPP New Radio (NR).

Any aspect of the technique may be implemented on a Physical Layer (PHY), a Medium Access Control (MAC) layer, a Radio Link Control (RLC) layer, a packet data convergence protocol (PDCP) layer, and/or a Radio Resource Control (RRC) layer of a protocol stack for the radio communication.

As to a still further aspect a communication system including a host computer is provided. The host computer comprises a processing circuitry configured to provide user data, e.g., included in the first and/or second data of the multilayer transmission. The host computer further comprises a communication interface configured to forward the first and/or second data to a cellular network (e.g., the RAN and/or the base station) for transmission to a UE. A processing circuitry of the cellular network is configured to execute any one of the steps of the second method aspect. The UE comprises a radio interface and processing circuitry, which is configured to execute any one of the steps of the first method aspect.

The communication system may further include the UE. Alternatively, or in addition, the cellular network may further include one or more base stations configured for radio communication with the UE and/or to provide a data link between the UE and the host computer using the first and/or second method aspects.

The processing circuitry of the host computer may be configured to execute a host application, thereby providing the user data and/or any host computer functionality described herein. Alternatively, or in addition, the processing circuitry of the UE may be configured to execute a client application associated with the host application.

Any one of the devices, the radio device, the UE, the network node (e.g., the base station), the communication system or any node or station for embodying the technique may further include any feature disclosed in the context of the method aspects, and *vice versa.* Particularly, any one of the units and modules disclosed herein may be configured to perform or initiate one or more of the steps of the method aspects.

## Brief Description of the Drawings

Further details of embodiments of the technique are described with reference to the enclosed drawings, wherein:

Fig. 1    shows a schematic block diagram of an embodiment of a device for receiving scheduling information;

Fig. 2    shows a schematic block diagram of an embodiment of a device for transmitting scheduling information;

Fig. 3    shows a flowchart for a method of receiving scheduling information, which method may be implementable by the device of Fig. 1;

Fig. 5    shows a flowchart transmitting scheduling information, which method may be implementable by the device of Fig. 2;

Fig. 6    schematically an example of scheduling information, which may be used by any embodiment of the devices of Figs. 1 and 2 for performing the methods of Figs. 3 and 4, respectively;

Fig. 7    schematically illustrates an example of configuration information, which may be used by any embodiment of the devices of Figs. 1 and 2 for performing the methods of Figs. 3 and 4, respectively;

Fig. 8    schematically illustrates an example of control information, which may be used by any embodiment of the devices of Figs. 1 and 2 for performing the methods of Figs. 3 and 4, respectively;

Fig. 9    shows a schematic block diagram of a radio device embodying the device of Fig. 1;

Fig. 10    shows a schematic block diagram of a network node embodying the device of Fig. 2;

Fig. 11    schematically illustrates an example telecommunication network connected via an intermediate network to a host computer;

Fig. 12 shows a generalized block diagram of a host computer communicating via a base station or radio device functioning as a gateway with a user equipment over a partially wireless connection; and

Figs. 13 and 14 show flowcharts for methods implemented in a communication system including a host computer, a base station or radio device functioning as a gateway and a user equipment.

**Detailed Description**

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a New Radio (NR) or 5G implementation, it is readily apparent that the technique described herein may also be implemented for any other radio communication technique, including a Wireless Local Area Network (WLAN) implementation according to the standard family IEEE 802.11, 3GPP LTE (e.g., LTE-Advanced or a related radio access technique such as MulteFire), for Bluetooth according to the Bluetooth Special Interest Group (SIG), particularly Bluetooth Low Energy, Bluetooth Mesh Networking and Bluetooth broadcasting, for Z-Wave according to the Z-Wave Alliance or for ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

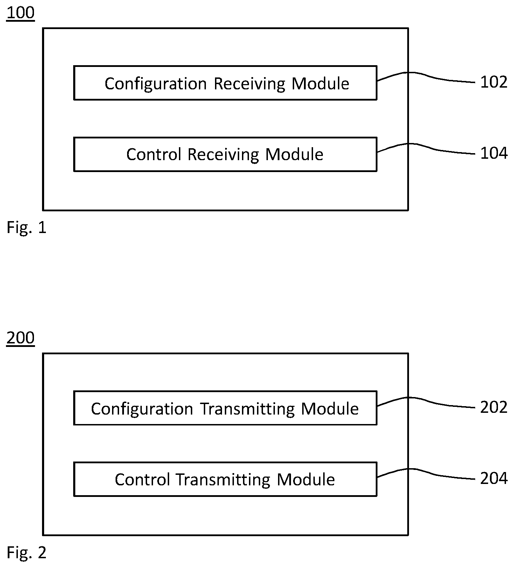

Fig. 1 schematically illustrates a block diagram of an embodiment of a device receiving scheduling information at a radio device from a network node of a RAN in radio communication with the radio device through at least two cells. The device is generically referred to by reference sign 100.

The device 100 comprises a configuration receiving module 102 that receives configuration information from the network node, the configuration information being indicative of at least one table comprising at least two alternatives of the scheduling information for each of the at least two cells. The device 100 further comprises a control receiving module 104 that receives control information from the network node, the control information being indicative of a reference to one of the at least two alternatives of the scheduling information for each of the at least two cells.

Any of the modules of the device 100 may be implemented by units configured to provide the corresponding functionality.

The device 100 may also be referred to as, or may be embodied by, the radio device (or briefly: UE). The radio device 100 and the network node may be in direct radio communication, e.g., during the receiving of the configuration information and/or the control information. The network node may be embodied by the device 200.

Fig. 2 schematically illustrates a block diagram of an embodiment of a device transmitting scheduling information to a radio device from a network node of a RAN in radio communication with the radio device through at least two cells. The device is generically referred to by reference sign 200.

The device 200 comprises a configuration transmitting module 202 that transmits configuration information from the network node, the configuration information being indicative of at least one table comprising at least two alternatives of the scheduling information for each of the at least two cells. The device 200 further comprises a control transmitting module 204 that performs the step of transmitting control information from the network node, the control information being indicative of a reference to one of the at least two alternatives of the scheduling information for each of the at least two cells.

Any of the modules of the device 200 may be implemented by units configured to provide the corresponding functionality.

The device 200 may also be referred to as, or may be embodied by, the network node (or base station). The network node 200 and the radio device may be in direct radio communication, e.g., during the transmitting of the configuration information and/or the control information. The radio device may be embodied by the device 100.

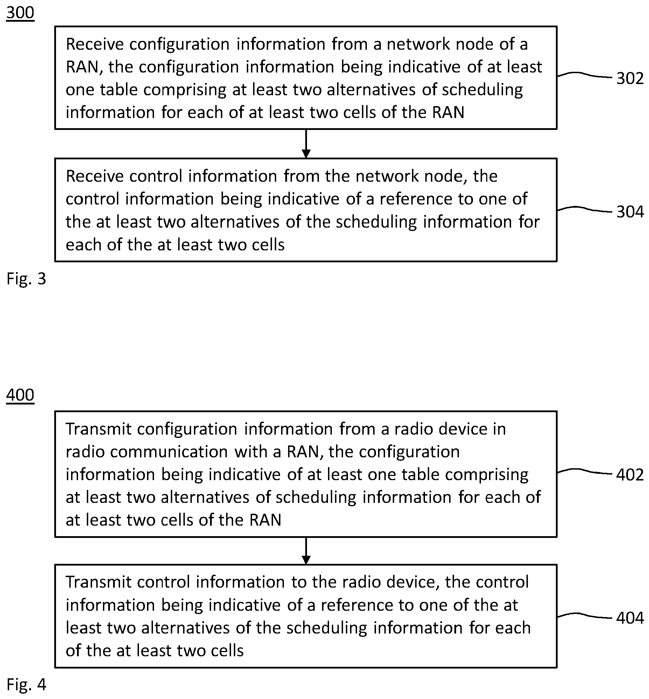

Fig. 3 shows an example flowchart for a method 300 according to the first method aspect and/or for receiving scheduling information at a radio device from a network node of a RAN in radio communication with the radio device through at least two cells.

The RAN may comprise the at least two cells.

The method 300 comprises a step 302 of receiving configuration information from the network node, the configuration information being indicative of at least one table comprising at least two alternatives of the scheduling information for each of the at least two cells. The method 300 further comprises a step 304 of receiving control information from the network node, the control information being indicative of a reference to one of the at least two alternatives of the scheduling information for each of the at least two cells.

The method 300 may be performed by the device 100. For example, the modules 102 and 104 may perform the steps 302 and 304, respectively.

Fig. 4 shows an example flowchart for a method 400 according to the second method aspect and/or for transmitting scheduling information to a radio device from a network node of a RAN in radio communication with the radio device through at least two cells.

The RAN may comprise the at least two cells.

The method 400 comprises a step 402 of transmitting configuration information to the radio device, the configuration information being indicative of at least one table comprising at least two alternatives of the scheduling information for each of the at least two cells. The method 400 further comprises a step 404 of transmitting control information to the radio device, the control information being indicative of a reference to one of the at least two alternatives of the scheduling information for each of the at least two cells.

The method 400 may be performed by the device 200. For example, the modules 202 and 204 may perform the steps 402 and 404, respectively.

The device 100 and the device 200 may be a radio device (e.g., UE) and a network node (e.g., base station), respectively. Herein, any radio device may be a mobile or portable station and/or any radio device wirelessly connectable to a base station or RAN, or to another radio device. For example, the radio device may be a user equipment (UE), a device for machine-type communication (MTC) or a device for (e.g., narrowband) Internet of Things (IoT). Two or more radio devices may be configured to wirelessly connect to each other, e.g., in an *ad hoc* radio network or via a 3GPP SL connection. Furthermore, any base station may be a station providing radio access, may be part of a radio access network (RAN) and/or may be a node connected to the RAN for controlling the radio access. For example, the base station may be an access point, for example a Wi-Fi access point.

Any aspect of the technique may be implemented in accordance with, or by extending, the 3GPP document TS 38.331, version 16.1.0. For example, the 3GPP document TS 38.331 may be extended by including how DCI fields can be configured.

Furthermore, any aspect may be implemented on the physical layer (PHY layer or L1) of the protocol stack, or preferably on Layer 2 (L2) and/or Layer 3 (L3). Moreover, any aspect may be implemented for the Internet of Things (IoT).

The different cells may use different antennas. Any aspect may use multi-antennas.

The technique may be applied to uplink (UL), downlink (DL) or direct communications between radio devices, e.g., device-to-device (D2D) communications or sidelink (SL) communications.

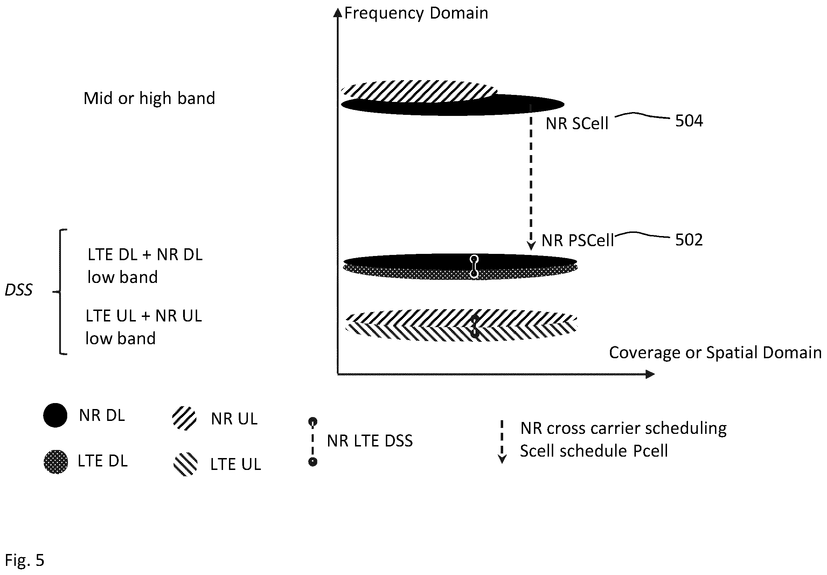

Fig. 5 illustration an exemplary arrangement of the at least two cells in the frequency domain and in the spatial domain for implementing any aspect of the technique. Alternatively or in addition, the technique may be implemented using cross-carrier scheduling, e.g., an Scell for schedule a Pcell and/or according to 3GPP Release 16 (e.g., for NR or LTE).

For example the cross-carrier scheduling may allow a NR PDCCH on an SCell 502 (which may be in a mid-band, e.g., in 3-6 GHz, or in a high band, e.g., 6 to 60 GHz or more) to schedule a NR PDSCH on a PCell or PSCell 502 (which may be in a low-band, e.g., in 1 to 4 GHz). This may improve NR PDCCH capacity under dynamic spectrum sharing (DSS).

Optionally, embodiments may allow PDCCH on both the PCell or PSCell 502 and on the Scell 504 to avoid problems due to limited coverage on the mid or high band. In this context, a link quality may be monitored on the PCell or PSCell 502 only.

In 3GPP Release 17 for NR (e.g., according to a work item RP-193260) the DSS should be able to support cross-carrier scheduling mainly motivated by the enhancement of PDCCH capacity in DSS band (e.g., the band that is subject to DSS). This enhancement is especially useful when a single Pcell or PSCell 502 in the mid or high band.

Physical downlink control channel capacity maybe limited for NR carrier especially for DSS due to the limited number of available OFDM symbols for carrying NR PDCCH, e.g., since NR and LTE share the same carrier.

As a generic observation, resources for the control information (i.e., DCI or PDCCH) are rare and there is a need for a scheduling technique that efficiently schedules multiples cells.

The technique may be advantageously applied for PDCCH on an Scell 504 as carrying the control information to schedule a Pcell 502, e.g., to schedule radio resources on the PDSCH and/or the PUSCH of the Pcell 502. The Scell 502 is usually is in mid-band and not in (e.g., dynamically) shared spectrum with another RAT, and the Pcell 502 is typically in low band and will be a DSS cell, i.e., using spectrum that is (e.g., dynamically) shared with another RAT, e.g., as illustrated in Fig. 5.

Further embodiments of the technique use a single PDCCH of a Pcell or PSCell 502 or an SCell 504 to scheduling PDSCH on one or more cells (e.g. 2 cells) using a single DCI as the control information. This can be beneficial if an increase in the size of the DCI due to the increased number of at least two cells is minimized or avoided, e.g., relative to a DCI for scheduling a single cell.

Alternatively or in addition, any embodiment of the technique may support different numerologies in different cells of the at least two cells, e.g., in cross-carrier scheduling between a Pcell or PSCell 502 and one or more Scells 504. One challenge is the time domain alignment for PDCCH relative to the two or more PDSCHs of the respective cells with different subcarrier spacings (SCSs) since one OFDM symbol duration in one cell differs from the duration in another cell according to the respective numerologies.

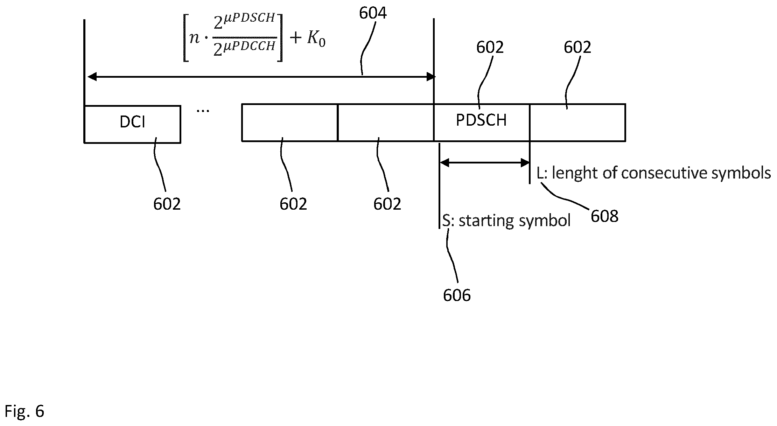

Fig. 6 schematically illustrates the indication of (e.g., scheduled) radio resource (e.g., on PDSCH) by means of DCI field depending on different numerologies, i.e. how misalignment can be compensated by the equation in Fig. 6 for the slot offset 604 in terms of slots 602.

Time Domain resource allocation for PDSCH is defined through RRC parameters, namely K0 and a Start and Length Indicator Value (SLIV). Time Domain resource allocation specifies an index table, so called *PDSCH-Time-DomainResourceAllocation.* It is defined as an array element of an Information element (IE) called *pdsch-AllocationList.* The time domain resource allocation for a PDSCH and/or PUSCH is indicated by a 'Time domain resource assignment' (TDRA) field in the corresponding DCI (e.g. DCI format 0-0 or 0-1 for uplink or DCI format 1-0 or 1-1 for downlink) and the corresponding TDRA table configured by the higher layers. Multiple TDRA tables can be configured by higher layers, e.g. separate tables for downlink and uplink, as well as separate tables for receiving broadcast PDSCH and unicast PDSCH, etc.

A UE 100 embodying the radio device 100 can be configured with multiple cells, e.g., 502 and 504. For one cell of the multiple cells, the UE 100 can be configured to monitor one or more DCI scheduling a single cell, and to monitor one or more DCI as the control information scheduling multiple cells. In DCI scheduling multiple cells, only a portion of the DCI may contain scheduling information relevant for each cell.

DCI scheduling a single cell can be DCI 1-0 or DCI 1-1 or DCI 1-2 for downlink. DCI scheduling a single cell can be DCI 0-0 or DCI 0-1 or DCI 0-2 for uplink. The DCI scheduling multiple cells may be denoted by DCI 1-N.

In an embodiment of the technique, the RRC parameter *PDSCH-TimeDomainResourceAllocation* specifies a row in the at least one table being indicative of the start symbol S 606 and length L 608 (collectively referred to as Start and Length Indicator Value, SLIV). The row may be determined by the reference, e.g., a DCI field of the DCI format for the multi-cell scheduling and/or the Time domain resource assignment (TDRA field).

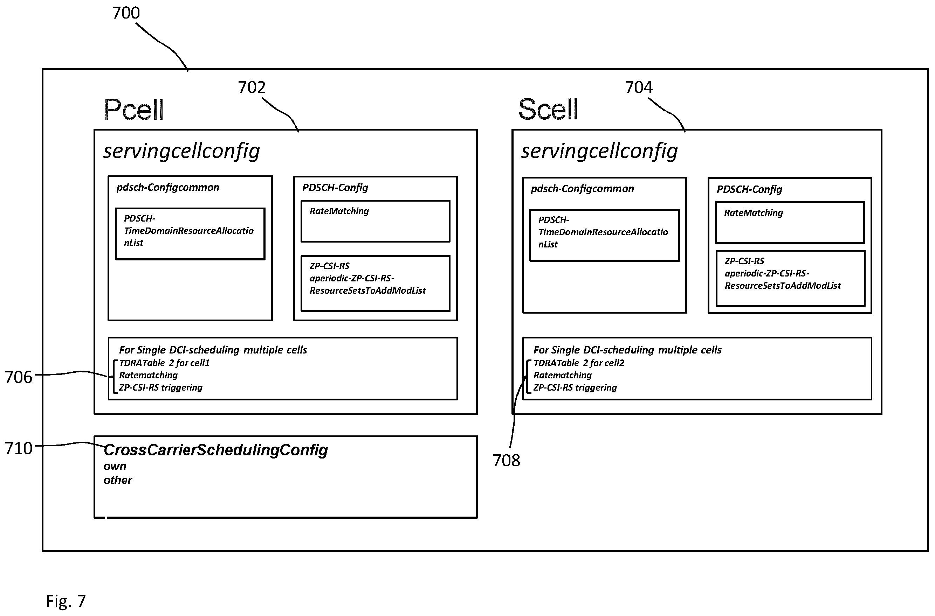

Fig. 7 schematically illustrates an implementation of a joint RRC configuration as the configuration information 700 for a single DCI as the control information that schedules the at least two cells (e.g., 2 cells, e.g., the Pcell and the Scell) by means of the reference. Herein, the notations Pcell and PCell are equivalent, and the notations SCell and Scell are equivalent.

The IE *PDSCH-ConfigCommon* may be used to configure cell-specific PDSCH parameters as the configuration information 700, e.g., at reference sign 702 for the Pcell 502 and 704 for the Scell 504, respectively.

The configuration information 700 may be provided to the radio device 100 as an MO (e.g., management object), e.g., of a higher layer of the protocol stack of the radio communication.

The configuration information 700 may comprise or may be implemented by a serving cell configurations 702 and 704 for each of the at least two cells, e.g., for the Pcell or PScell 502 and the Scell 504, respectively.

Optionally, the parameter *CrossCarrierSchedulingConfig* may function as an indicator 710 indicating that the multi-cell scheduling is enabled, for example by indicating that the control information applies to each of the at least two cells.

Below embodiments describe the different aspects (e.g., UE and network aspects) collectively. The skilled person understands that this disclosure provides direct disclosure for each of the aspects.

In a first embodiment, the configuration information comprises higher layer RRC configuration information elements listed together to work with cross-carrier scheduling specific IE to set a default and/or joint configuration.

For example, a list of 3 DCI format 1_1 field 706 and 708, which can be gathered together to be shared in a joint configuration are listed, e.g., as illustrated in Fig. 7. Since there is an RRC IE cross-carrier scheduling configuration as the indicator 710 to configure the UE 100 for 'own' and 'other' parameters, this indicator 700 may also be used to combine with the joint configuration, i.e., the at least one table according to the configuration information.

In a first variant of the first embodiment, the DCI format 1-1 field 'Rate matching indicator' is needed to be or remain independent with two carriers and indicated through a joint configuration table an example of the at least one table.

For example, the at least two alternatives of the scheduling information comprise at least two alternatives (i.e., alternative values, e.g., in different rows) of the DCI field 'Rate matching indicator' for each of the at least two cells (e.g., in different columns).

This field may be 0, 1, 2 bits in size according to a parameter rate-match-PDSCH-resource-set. The first embodiment allows this field to go through a joint indexing table as an example of the at least one table. The table may comprise in each alternative of the scheduling information a value of this field. This field may be smaller than 4 bits and/or may be repeated in both cells (e.g., carriers), e.g., at reference signs 706 and 708.

In a second variant of the first embodiment (which may be combined with the first variant), the DCI format 1-1 field 'ZP CSI-RS trigger' is for triggering the aperiodic ZP-CSI-RS (as an example of the scheduling information), which is needed to be or remain independent with the at least two cells (e.g., two carriers) and indicated through a joint configuration table as an example of the at least one table.

For example, the at least two alternatives of the scheduling information comprise at least two alternatives (i.e., alternative values, e.g., in different rows) of the DCI field 'ZP CSI-RS trigger' (as an example of the scheduling information) for each of the at least two cells (e.g., in different columns).

This field can be 0, 1, 2 bits depend on the number of aperiodic *ZP-CSI-RS-ResourceSet(s)* configured and goes through the indexing table as an example of the at least one table.

A single-DCI to schedule at least two (i.e., multiple) cells, as a third variant of the first embodiment (which may be combined with the first and/or second variant), may define time domain resource allocation for PDSCH through RRC by a list of *PDSCH-TimeDomainResourceAllocation* (called *PDSCH-TimeDomainResourceAllocationList*), and indicate through the DCI format 1-1 and 1-0 field 'time domain resource assignment' the row index of the table and the DCI code point indicates which row is to be used.

Hence, the DCI format 1-1 field 'time domain resource assignment' is needed to be or remain independent with the at least two cells (e.g., two carriers) and indicate through a joint configuration as an example of the at least one table.

In fourth variant of the first embodiment (which may be combined with the first and/or second and/or third variant), the UE 100 may be configured with one or more TDRA tables for each cell as examples of the at least one table.

Alternatively or in addition, the UE 100 is configured with a joint TDRA table for the at least two cells. The joint TDRA table uses a single TDRA field (as an example of the reference) to identify the row in the TDRA table and thus the TDRA value (e.g. K0 and SLIV as an example of the scheduling information) used for the first cell and the TDRA value (e.g. K0 and SLIV as an example of the scheduling information) used for the second cell (e.g., in different columns of the TDRA table).

When the UE 100 receives a DCI 1-1 (or a DCI scheduling a single cell), the UE 100 determines the TDRA value (as an example of the scheduling information) for the PDSCH using the TDRA field in the DCI and a TDRA table (or the row of the joint TDRA table) that is associated only with the single cell, i.e., the respective one of the at least two cells.

When the UE 100 receives a DCI 1-N (or a DCI scheduling multiple cells, i.e. for scheduling the at least two cells), the UE 100 determines the TDRA value (as an example of the scheduling information) for the PDSCH on a first cell of the at least two cells using the TDRA field (i.e., the reference) in the DCI (i.e., the control information) and a joint TDRA table (i.e., the at least one table) associated with both cells.

Implementation examples of the first embodiment are described herein below.

Below Table 1 is an implementation example of a first TDRA table (as one of the at least one table) associated with the first cell only. The first TDRA table may be used, inter alia, with DCI 1-1 (or a DCI scheduling single cell) scheduling the first cell. Optionally, the scheduling information for each of the at least two cells is determined by access by means of the reference the first table of the first cell and a second table of a second cell.

Table 1. First TDRA table associated with DCI scheduling single cell for the first cell (cell 1) of the at least two cells

| TDRA-cell1 field value (reference) | K0 and SLIV for CC1 (or cell1) (scheduling information) |
|---|---|
| 0 | S=2,L=12 |
| 1 | S=0,L=14 |
| 2 | S=1,L=13 |
| 3 | S=3,L=11 |

Below Table 2 is an implementation example of a second TDRA table (as an example of the at least one table) associated with a second cell only. The second TDRA table may be used with DCI 1-1 (or a DCI scheduling single cell) scheduling the second cell.

Table 2. TDRA table associated with DCI scheduling single cell for second cell (cell 2)

| TDRA-cell2 field value (reference) | K0 and SLIV for CC2 (or cell2) (scheduling information) |
|---|---|
| 0 | S=1,L=12 |
| 1 | S=1,L=10 |
| 2 | S=1,L=13 |
| 3 | S=3,L=11 |

Table 3 below is an implementation example of a joint TDRA table (as an example of the at least one table) with DCI 1-N (or a DCI scheduling multiple cells) scheduling the first cell and the second cell (i.e., jointly scheduling). Based on the indicated joint TDRA index (as an example of the reference) in the control information, the corresponding TDRA values (i.e. K0 and SLIV) as the scheduling information are determined for the corresponding cells (i.e., for each of the two cells).

The UE 100 may determine a bit width of the DCI field based on the number of entries in the joint RRC IE *PDSCH-TimeDomainResourceAllocationListJoint*.

Table 3. Joint TDRA table associated with DCI scheduling multiple cells, i.e., for the first cell (cell 1) and the second cell (cell 2)

| Joint TDRA index (reference) | K0 and SLIV for CC1 (or cell1, FDD) (scheduling information) | K0 and SLIV for CC2 (or cell2, TDD) (scheduling information) |
|---|---|---|
| 0 | S=0,L=14 | S=2,L=12 |
| 1 | S=2,L=12 | S=1,L=10 |
| 2 | S=1,L=13 | S=1,L=13 |
| 3 | S=3,L=11 | S=3,L=11 |

A second embodiment, which may be combined with the first embodiment, uses a single DCI (as an example of the control information) to schedule multiple cells (i.e., the at least two cells) using a joint row index table (as an example of the at least one table using a row index as the reference) and/or using different bit formats to reduce the DCI size (i.e., the size of the control information) for the at least two cells (e.g., 2 carriers in total).

As described above, a single DCI will be limited to schedule 2 cells, there will be 2 component carriers (as an example of the cells), hence adding an index table can identify the DCI field bit value for each carrier (i.e., for each cell). Exemplary details of the structure of the RRC IE (as the configuration information) are explained in Fig. 5.

In an extended or generalized variant of any embodiment uses a full index table (e.g., as illustrated in below Table 5) as one of the at least one table.

For example, the scheduling information to be determined for each of the at least two cells is or comprises the DCI field 'ZP-CSI-RS trigger'. This field indicates which aperiodic ZP-CSI-RS resource set to be used among the two sets configured independently for two cells (e.g., component carriers).

The extended or generalized variant may be applied for all possible combinations across the two cells (e.g., two carriers).

The full index table maps the reference indicated in the control information to a first reference of the first cell and a second reference of the second cell. For example, code points are used as the first and second references.

In separate DCI indication, *DCI field codepoint '01' (as an example value of the first reference or second reference) triggers the resource set with set ZP-CSI-RS-ResourceSetIds=1, which may be indicated in the corresponding BWP. There is 1 aperiodic ZP-CSI-RS being configured. DCI field codepoint '10' triggers the resource set with set ZP-CSI-RS-ResourceSetIds=2.* DCI field codepoint '10' triggers the resource set with set ZP-CSI-RS-ResourceSetIds=3.

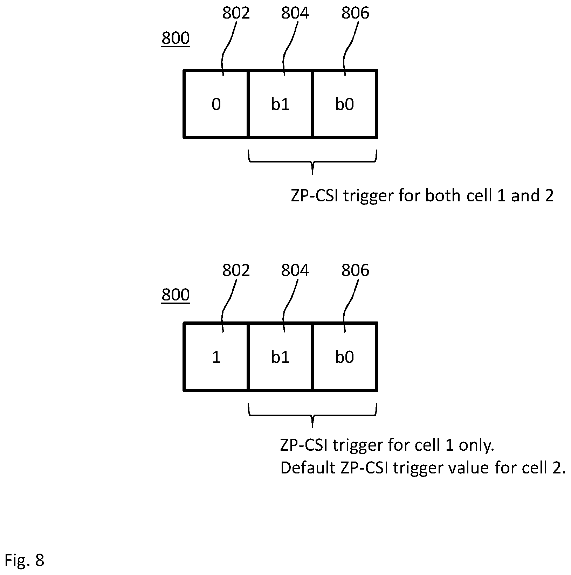

Fig. 8 schematically illustrates changing the 2 bits DCI field of 'ZP CSI-RS trigger' to a joint 3 bits DCI field trigger.

The 2-bits field in the bit field 800 is a joint control together with another ZP-CSI-RSI trigger (e.g., configured in PDSCH-config) to indicate how many aperiodic ZP-CSI-RS are configured per BWP.

As illustrated in Fig. 8, adding one bit 802 indicates whether 2 cells are configured according to the bits 804 and 806 to the UE 100 (which will have same value or no trigger). Together with other PDSCH-config, the UE 100 will be able to know for each specific cell the field value.

For example, adding the bit '0' (e.g., first bit at reference sign 802) indicates 2 cells have the same code point, and the code point will be referring to the next 2 code point.

DCI field codepoint '001' triggers the resource set with set ZP-CSI-RS-ResourceSetIds=1 for both cells. There is 1 aperiodic ZP-CSI-RS being configured.

Adding the bit '1' (e.g., first bit at reference sign 802) indicates 2 cells have different codepoints, and only 1 trigger cell will be able to indicate.

DCI field codepoint '101' triggers the resource set with set ZP-CSI-RS-ResourceSetIds=1 for the own cell. There is 1 aperiodic ZP-CSI-RS being configured, the other cell remains default states '00'.

The motivation behind of saving 1 bit in this DCI field is due to the reason that aperiodic ZP-CSI-RS will be only triggered when there is sparse CSI feedback needed for certain scenario, so the accuracy measurement difference between 2 and 3 aperiodic ZP-CSI-RS between 2 cells towards 1 UE should be rather limited. Any embodiment for TDRA table and Rate Matching table (i.e., any embodiment using TDRA and rate matching index as scheduling information) may use a similar approach, which may avoid a conventional repeating for both cells and/or may lead to a reduction of the bits after combining them, preferably without heavy impact to limiting the joint configuration.

Below Table 4 is an implementation example of the at least one table using TDRA as the scheduling information. Instead of explicit TDRA entries for each cell, the joint TDRA table uses a lookup table, in which the joint TDRA index as the reference is mapped to a per-cell TDRA index as the first and second reference, which is then used along with the corresponding cell TDRA table (as further examples of the at least one table) that may be associated with a DCI scheduling single cell. This can lead to a much more compact indication mechanism with reduced signaling overhead. A single joint TDRA field as the reference is included in the DCI (as the control information) for scheduling multiple cells, e.g., for indicating the TDRA for both cells.

Table 4. Joint TDRA table associated with DCI scheduling multiple cells for cells 1 and 2

| Joint TDRA index (as the reference) | TDRA-cell1 index for CC1 (or cell1, FDD) (as the first reference) | TDRA-cell2 index for CC2 (or cell2, TDD) (as the second reference) |
|---|---|---|
| 0 | 0 | 0 |
| 1 | 1 | 1 |
| 2 | 2 | 0 |
| 3 | 3 | 1 |

In yet another example, for each cell, the UE 100 can be configured with a separate TDRA table (e.g., TDRA table 2, which may be different from the TDRA used with DCI scheduling single cell) for reception of PDSCH with DCI scheduling multiple cells. This separate TDRA table can be configured in the PDSCH-Config for the corresponding cell. However, there can be a single joint TDRA indication in the DCI scheduling multiple cells.

The field size (e.g., of joint TDRA field) in the DCI scheduling multiple cells is determined based on the number of entries (e.g. TDRA entries) configured for cell 1 and associated with DCI scheduling multiple cells, and the number of entries (e.g. TDRA entries) configured for cell 2 and associated with DCI scheduling multiple cells. For example, the field size (e.g., joint TDRA field) in the DCI scheduling multiple cells can be

$$\max\left( \lceil \log_2(I_1) \rceil , \lceil \log_2(I_2) \rceil \right),$$

wherein $I_1$ is the number of entries in the higher layer parameter (e.g. pdsch-TimeDomainAllocationListForCC1andDCI_1-N) configured for cell 1 and associated with DCI scheduling multiple cells, and I2 is the number of entries in the higher layer parameter (e.g. pdsch-TimeDomainAllocationListForCC1andDCI_1-N) for cell 2 and associated with DCI scheduling multiple cells.

In some embodiments, the field size (e.g., of joint TDRA field) in the DCI scheduling multiple cells is determined based on the maximum across all configured BWPs across both carriers.

In some embodiments, the field size (e.g., of joint TDRA field) in the DCI scheduling multiple cells is explicitly configured via higher layers (e.g., $L = 2$ bits). In some embodiments, if the field size is 3 bits, but the number of entries for a cell (e.g., cell 2) is small (e.g., $I_2 = 4$) while the number of entries for another cell (e.g. cell 1) is $I_1 = 8$, then it can lead to case where the 3-bit TDRA field ($I_{12} = 7$, e.g. by bit string = '111') may be considered as indicating invalid TDRA for cell 2 while it yields a valid TDRA for cell 1. Such indication in DCI can be considered as supporting single cell PDSCH (i.e., only cell 1).

Another option is to define a mapping from 3-bit field to one of the valid entries for cell 2. For example, a modulo operation (e.g., $I_{12}$ mod $I_2$) can be used to map the joint TDRA field to a valid TDRA entry for cell 2.

Another option is to define a lookup table (as also illustrated in table 4), where joint TDRA index = 0,2 map to TDRA entry 0 for cell 2.

While TDRA is used for illustration, the same principles are applicable for one or more the following fields *'Rate matching indicator'* and *'ZP CSI-RS trigger'*.

Table 5. Example of the mapping from the reference to the first and second references: For example, DCI 1-1 field 'ZP CSI-RS trigger' all combination listed together for two cells.

| Row Index (as the reference) | Code bit for Component Carrier 1 or first cell (first reference) | Code bit for Component Carrier 2 or second cell (second reference) |
|---|---|---|
| 0 | 00 | 00 |
| 1 | 10 | 10 |
| 2 | 01 | 01 |
| 3 | 11 | 11 |
| 4 | 00 | 01 |

(continued)

| Row Index (as the reference) | Code bit for Component Carrier 1 or first cell (first reference) | Code bit for Component Carrier 2 or second cell (second reference) |
|---|---|---|
| 5 | 01 | 00 |
| 6 | 00 | 10 |
| 7 | 10 | 00 |
| 8 | 00 | 11 |
| 9 | 11 | 00 |
| 10 | 01 | 10 |
| 11 | 10 | 01 |
| 12 | 01 | 11 |
| 13 | 11 | 01 |
| 14 | 10 | 11 |
| 15 | 11 | 10 |

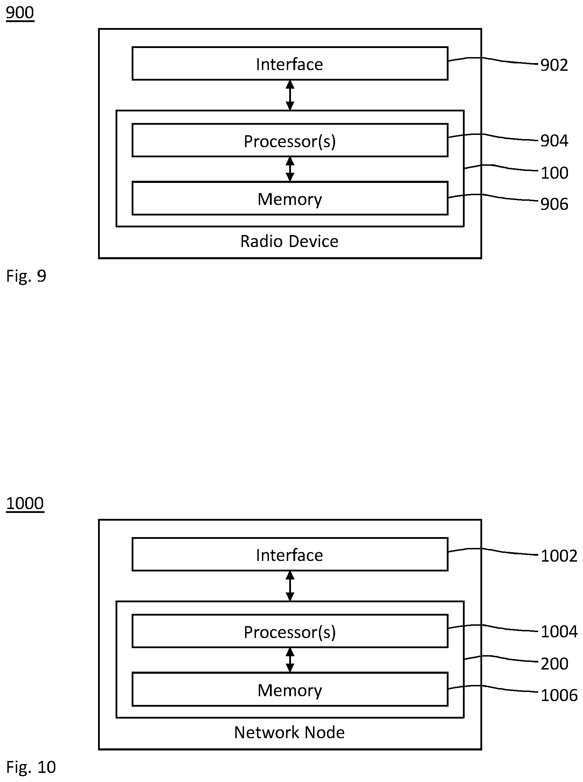

Fig. 9 shows a schematic block diagram for an embodiment of the device 100. The device 100 comprises processing circuitry, e.g., one or more processors 904 for performing the method 300 and memory 906 coupled to the processors 904. For example, the memory 906 may be encoded with instructions that implement at least one of the modules 102 and 104.

The one or more processors 904 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100, such as the memory 906, radio device functionality. For example, the one or more processors 904 may execute instructions stored in the memory 906. Such functionality may include providing various features and steps discussed herein, including any of the benefits disclosed herein. The expression "the device being operative to perform an action" may denote the device 100 being configured to perform the action.

As schematically illustrated in Fig. 9, the device 100 may be embodied by a radio device 900, e.g., functioning as a UE. The UE 900 comprises a radio interface 902 coupled to the device 100 for radio communication with one or more base stations, e.g., functioning as a receiving base station or a receiving UE.

Fig. 10 shows a schematic block diagram for an embodiment of the device 200. The device 200 comprises processing circuitry, e.g., one or more processors 1004 for performing the method 400 and memory 1006 coupled to the processors 1004. For example, the memory 1006 may be encoded with instructions that implement at least one of the modules 202 and 204.

The one or more processors 1004 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100, such as the memory 1006, network node functionality. For example, the one or more processors 1004 may execute instructions stored in the memory 1006. Such functionality may include providing various features and steps discussed herein, including any of the benefits disclosed herein. The expression "the device being operative to perform an action" may denote the device 200 being configured to perform the action.

As schematically illustrated in Fig. 10, the device 200 may be embodied by a network node 1000, e.g., functioning as a base station. The base station 1000 comprises a radio interface 1002 coupled to the device 200 for radio communication with one or more UEs.

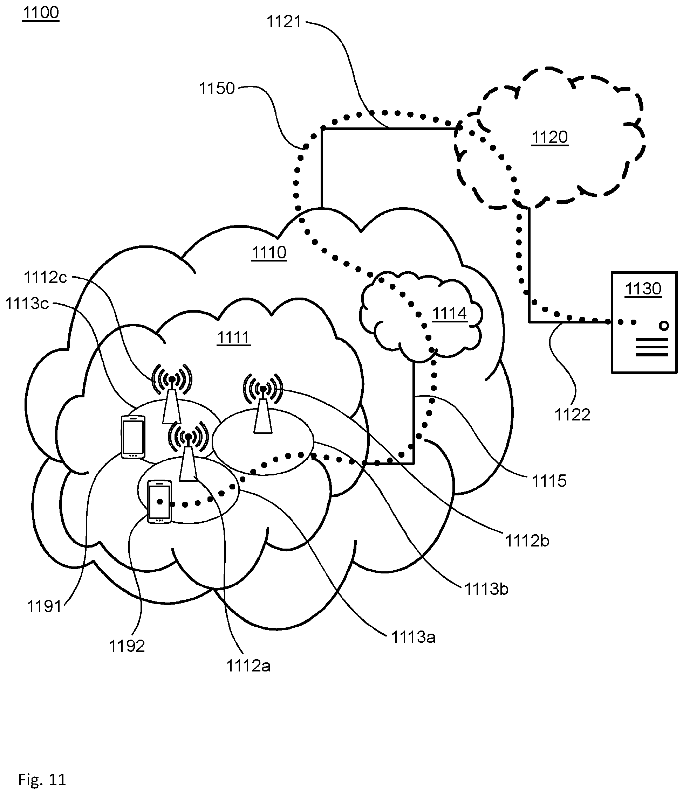

With reference to Fig. 11, in accordance with an embodiment, a communication system 1100 includes a telecommunication network 1110, such as a 3GPP-type cellular network, which comprises an access network 1111, such as a radio access network, and a core network 1114. The access network 1111 comprises a plurality of base stations 1112a, 1112b, 1112c, such as NBs, eNBs, gNBs or other types of wireless access points, each defining a corresponding coverage area 1113a, 1113b, 1113c. Each base station 1112a, 1112b, 1112c is connectable to the core network 1114 over a wired or wireless connection 1115. A first user equipment (UE) 1191 located in coverage area 1113c is configured to wirelessly connect to, or be paged by, the corresponding base station 1112c. A second UE 1192 in coverage area 1113a is wirelessly connectable to the corresponding base station 1112a. While a plurality of UEs 1191, 1192 are illustrated in this example, the disclosed embodiments are equally applicable to a situation where a sole UE is in the coverage area or where a sole UE is connecting to the corresponding base station 1112.

Any of the base stations 1112 and the UEs 1191, 1192 may embody the device 100.

The telecommunication network 1110 is itself connected to a host computer 1130, which may be embodied in the hardware and/or software of a standalone server, a cloud-implemented server, a distributed server or as processing resources in a server farm. The host computer 1130 may be under the ownership or control of a service provider, or may be operated by the service provider or on behalf of the service provider. The connections 1121, 1122 between the telecommunication network 1110 and the host computer 1130 may extend directly from the core network 1114 to the host computer 1130 or may go via an optional intermediate network 1120. The intermediate network 1120 may be one of, or a combination of more than one of, a public, private or hosted network; the intermediate network 1120, if any, may be a backbone network or the Internet; in particular, the intermediate network 1120 may comprise two or more sub-networks (not shown).

The communication system 1100 of Fig. 11 as a whole enables connectivity between one of the connected UEs 1191, 1192 and the host computer 1130. The connectivity may be described as an over-the-top (OTT) connection 1150. The host computer 1130 and the connected UEs 1191, 1192 are configured to communicate data and/or signaling via the OTT connection 1150, using the access network 1111, the core network 1114, any intermediate network 1120 and possible further infrastructure (not shown) as intermediaries. The OTT connection 1150 may be transparent in the sense that the participating communication devices through which the OTT connection 1150 passes are unaware of routing of uplink and downlink communications. For example, a base station 1112 need not be informed about the past routing of an incoming downlink communication with data originating from a host computer 1130 to be forwarded (e.g., handed over) to a connected UE 1191. Similarly, the base station 1112 need not be aware of the future routing of an outgoing uplink communication originating from the UE 1191 towards the host computer 1130.

By virtue of the method 200 being performed by any one of the UEs 1191 or 1192 and/or any one of the base stations 1112, the performance or range of the OTT connection 1150 can be improved, e.g., in terms of increased throughput and/or reduced latency. More specifically, the host computer 1130 may indicate to the RAN 1111 or the radio device (e.g., on an application layer) to use the at least two cells.

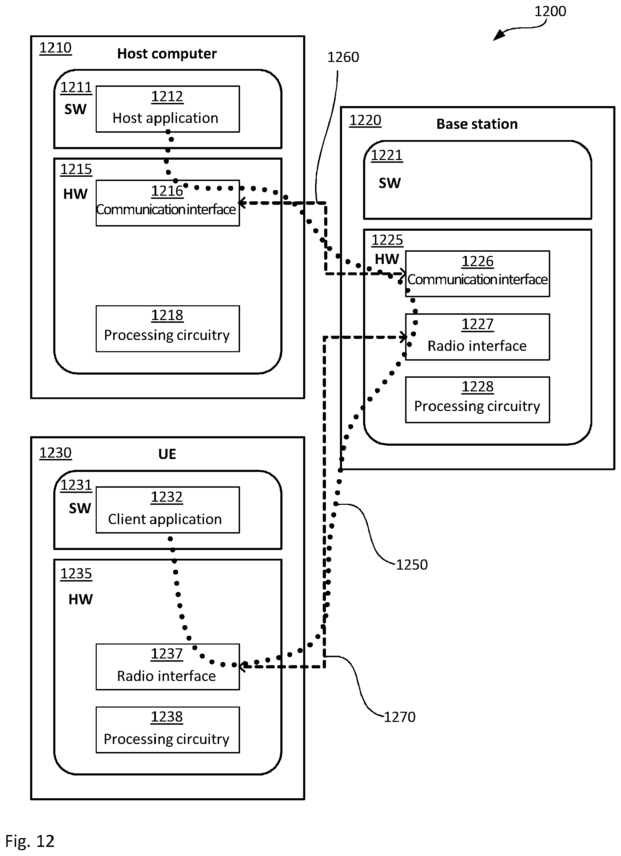

Example implementations, in accordance with an embodiment of the UE, base station and host computer discussed in the preceding paragraphs, will now be described with reference to Fig. 12. In a communication system 1200, a host computer 1210 comprises hardware 1215 including a communication interface 1216 configured to set up and maintain a wired or wireless connection with an interface of a different communication device of the communication system 1200. The host computer 1210 further comprises processing circuitry 1218, which may have storage and/or processing capabilities. In particular, the processing circuitry 1218 may comprise one or more programmable processors, application-specific integrated circuits, field programmable gate arrays or combinations of these (not shown) adapted to execute instructions. The host computer 1210 further comprises software 1211, which is stored in or accessible by the host computer 1210 and executable by the processing circuitry 1218. The software 1211 includes a host application 1212. The host application 1212 may be operable to provide a service to a remote user, such as a UE 1230 connecting via an OTT connection 1250 terminating at the UE 1230 and the host computer 1210. In providing the service to the remote user, the host application 1212 may provide user data, which is transmitted using the OTT connection 1250. The user data may depend on the location of the UE 1230. The user data may comprise auxiliary information or precision advertisements (also: ads) delivered to the UE 1230. The location may be reported by the UE 1230 to the host computer, e.g., using the OTT connection 1250, and/or by the base station 1220, e.g., using a connection 1260.

The communication system 1200 further includes a base station 1220 provided in a telecommunication system and comprising hardware 1225 enabling it to communicate with the host computer 1210 and with the UE 1230. The hardware 1225 may include a communication interface 1226 for setting up and maintaining a wired or wireless connection with an interface of a different communication device of the communication system 1200, as well as a radio interface 1227 for setting up and maintaining at least a wireless connection 1270 with a UE 1230 located in a coverage area (not shown in Fig. 12) served by the base station 1220. The communication interface 1226 may be configured to facilitate a connection 1260 to the host computer 1210. The connection 1260 may be direct, or it may pass through a core network (not shown in Fig. 12) of the telecommunication system and/or through one or more intermediate networks outside the telecommunication system. In the embodiment shown, the hardware 1225 of the base station 1220 further includes processing circuitry 1228, which may comprise one or more programmable processors, application-specific integrated circuits, field programmable gate arrays or combinations of these (not shown) adapted to execute instructions. The base station 1220 further has software 1221 stored internally or accessible via an external connection.

The communication system 1200 further includes the UE 1230 already referred to. Its hardware 1235 may include a radio interface 1237 configured to set up and maintain a wireless connection 1270 with a base station serving a coverage area in which the UE 1230 is currently located. The hardware 1235 of the UE 1230 further includes processing circuitry 1238, which may comprise one or more programmable processors, application-specific integrated circuits, field programmable gate arrays or combinations of these (not shown) adapted to execute instructions. The UE 1230 further comprises software 1231, which is stored in or accessible by the UE 1230 and executable by the processing circuitry 1238. The software 1231 includes a client application 1232. The client application 1232 may be operable to provide a service to a human or non-human user via the UE 1230, with the support of the host computer 1210. In the host computer 1210, an executing host application 1212 may communicate with the executing client application 1232 via the OTT connection 1250 terminating at the UE 1230 and the host computer 1210. In providing the service to the user, the client application 1232 may receive request data from the host application 1212 and provide user data in response to the request data. The OTT connection 1250 may transfer both the request data and the user data. The client application 1232 may interact with the user to generate the user data that it provides.

It is noted that the host computer 1210, base station 1220 and UE 1230 illustrated in Fig. 12 may be identical to the host computer 1130, one of the base stations 1112a, 1112b, 1112c and one of the UEs 1191, 1192 of Fig. 11, respectively. This is to say, the inner workings of these entities may be as shown in Fig. 12, and, independently, the surrounding network topology may be that of Fig. 11.

In Fig. 12, the OTT connection 1250 has been drawn abstractly to illustrate the communication between the host computer 1210 and the UE 1230 via the base station 1220, without explicit reference to any intermediary devices and the precise routing of messages via these devices. Network infrastructure may determine the routing, which it may be configured to hide from the UE 1230 or from the service provider operating the host computer 1210, or both. While the OTT connection 1250 is active, the network infrastructure may further take decisions by which it dynamically changes the routing (e.g., on the basis of load balancing consideration or reconfiguration of the network).

The wireless connection 1270 between the UE 1230 and the base station 1220 is in accordance with the teachings of the embodiments described throughout this disclosure. One or more of the various embodiments improve the performance of OTT services provided to the UE 1230 using the OTT connection 1250, in which the wireless connection 1270 forms the last segment. More precisely, the teachings of these embodiments may reduce the latency and improve the data rate and thereby provide benefits such as better responsiveness and improved QoS.

A measurement procedure may be provided for the purpose of monitoring data rate, latency, QoS and other factors on which the one or more embodiments improve. There may further be an optional network functionality for reconfiguring the OTT connection 1250 between the host computer 1210 and UE 1230, in response to variations in the measurement results. The measurement procedure and/or the network functionality for reconfiguring the OTT connection 1250 may be implemented in the software 1211 of the host computer 1210 or in the software 1231 of the UE 1230, or both. In embodiments, sensors (not shown) may be deployed in or in association with communication devices through which the OTT connection 1250 passes; the sensors may participate in the measurement procedure by supplying values of the monitored quantities exemplified above, or supplying values of other physical quantities from which software 1211, 1231 may compute or estimate the monitored quantities. The reconfiguring of the OTT connection 1250 may include message format, retransmission settings, preferred routing etc.; the reconfiguring need not affect the base station 1220, and it may be unknown or imperceptible to the base station 1220. Such procedures and functionalities may be known and practiced in the art. In certain embodiments, measurements may involve proprietary UE signaling facilitating the host computer's 1210 measurements of throughput, propagation times, latency and the like. The measurements may be implemented in that the software 1211, 1231 causes messages to be transmitted, in particular empty or "dummy" messages, using the OTT connection 1250 while it monitors propagation times, errors etc.

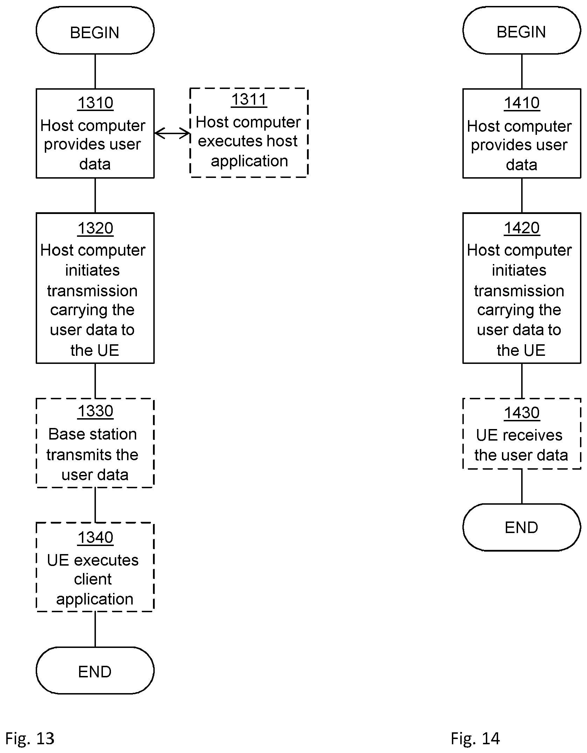

Fig. 13 is a flowchart illustrating a method implemented in a communication system, in accordance with one embodiment. The communication system includes a host computer, a base station and a UE which may be those described with reference to Figs. 11 and 12. For simplicity of the present disclosure, only drawing references to Fig. 13 will be included in this paragraph. In a first step 1310 of the method, the host computer provides user data. In an optional substep 1311 of the first step 1310, the host computer provides the user data by executing a host application. In a second step 1320, the host computer initiates a transmission carrying the user data to the UE. In an optional third step 1330, the base station transmits to the UE the user data which was carried in the transmission that the host computer initiated, in accordance with the teachings of the embodiments described throughout this disclosure. In an optional fourth step 1340, the UE executes a client application associated with the host application executed by the host computer.

Fig. 14 is a flowchart illustrating a method implemented in a communication system, in accordance with one embodiment. The communication system includes a host computer, a base station and a UE which may be those described with reference to Figs. 11 and 12. For simplicity of the present disclosure, only drawing references to Fig. 14 will be included in this paragraph. In a first step 1410 of the method, the host computer provides user data. In an optional substep (not shown) the host computer provides the user data by executing a host application. In a second step 1420, the host computer initiates a transmission carrying the user data to the UE. The transmission may pass via the base station, in accordance with the teachings of the embodiments described throughout this disclosure. In an optional third step 1430, the UE receives the user data carried in the transmission.

In any embodiment, the scheduling information may define any one or more DCI fields that are jointly indicated by means of the at least one table indicated by the configuration information. Such DCI fields may comprise at least one of a time-domain resource assignment (TDRA) field, a 'Rate matching indicator' field, and a 'ZP CSI-RS trigger' field.

As has become apparent from above description, at least some embodiments of the technique can simplify single-DCI scheduling of two or more (i.e., multiple) PDSCHs in both Pcell and Scell, e.g., since certain fields of the control information (e.g., DCI fields) for scheduling the at least two cells are jointly indicated for each of the at least two cells by means of the reference, e.g., using a corresponding joint configuration of the associated higher layer parameters of the configuration information for the corresponding fields of the control information. This is a generic scheme that can be used for PDCCH cross-carrier scheduling, e.g., of PDSCH.

Same or further embodiments allow each of the DCI field (e.g., the aforementioned three DCI fields) being configured together, e.g., without repeating the DCI fields for each of the at least two cells (i.e., for each carrier). This can reduce a potential DCI size ranging from 4 to 6 bits per DCI field to a much smaller value, e.g., equal to 3 bits per DCI field.

Many advantages of the present invention will be fully understood from the foregoing description, and it will be apparent that various changes may be made in the form, construction and arrangement of the units and devices without departing from the scope of the invention that is limited only by the scope of the following claims.

**Claims**

1. A method (300) of receiving scheduling information at a radio device (100; 900; 1191; 1192; 1230) from a network node (200; 1000; 1112; 1220) of a radio access network, RAN, (1111) in radio communication with the radio device (100; 900; 1191; 1192; 1230) through at least two cells, the method (300) comprising or initiating the steps of:

   receiving (302) configuration information from the network node (200; 1000; 1112; 1220), the configuration information being indicative of at least one table comprising at least two alternatives of the scheduling information for each of the at least two cells; and
   receiving (304) control information from the network node (200; 1000; 1112; 1220), the control information being indicative of a reference to one of the at least two alternatives of the scheduling information for each of the at least two cells.

2. The method (300) of claim 1, wherein the control information is, or is received in, one downlink control information, DCI, message.

3. The method (300) of claim 1, wherein the control information is, or is received in, more downlink control information, DCI, messages.

4. The method (300) of any one of claims 1 to 3, wherein the reference is a row index indicative of a row of the at least one table; and/or

   wherein the at least one table comprises a first table comprising the at least two alternatives of the scheduling information for a first cell of the at least two cells, the reference to the one of the at least two alternatives of the scheduling information in the first table being indicative of the scheduling information of the first cell, and a second table comprising the at least two alternatives of the scheduling information for a second cell of the at least two cells, the reference to the one of the at least two alternatives of the scheduling information in the second table being indicative of the scheduling information of the second cell; and/or
   wherein one table of the at least one table comprises a first column comprising the at least two alternatives of the scheduling information for a first cell of the at least two cells, the reference to the one of the at least two alternatives of the scheduling information in the first column being indicative of the scheduling information of the first cell, and a second column comprising the at least two alternatives of the scheduling information for a second cell of the at least two cells, the reference to the one of the at least two alternatives of the scheduling information in the second column being indicative of the scheduling information of the second cell; and/or
   wherein the at least one table comprises a reference table for mapping the reference of the control information to a first reference and a second reference, a first table comprising the at least two alternatives of the scheduling information for a first cell of the at least two cells, the first reference determining the one of the at least two alternatives of the scheduling information in the first table as the scheduling information of the first cell, and a second table comprising the at least two alternatives of the scheduling information for a second cell of the at least two cells, the second reference determining the one of the at least two alternatives of the scheduling information in the second table as the scheduling information of the second cell; and/or
   wherein the configuration information comprises at least one allocation list as the at least one table; and/or
   wherein the at least two alternatives of the scheduling information comprise at least two alternatives of a resource allocation; and/or

wherein the control information comprises a time domain resource assignment, TDRA, field that is indicative of the reference; and/or

wherein the configuration information is, or is received in, one or more radio resource control, RRC, messages; and/or

wherein the control information is received on a physical downlink control channel, PDCCH, of the radio communication.

5. The method (300) of any one of claims 1 to 4, wherein the scheduling information for each of the at least two cells is or comprises a resource allocation for each of the at least two cells.

6. The method (300) of claim 5, wherein the resource allocation for each of the at least two cells is indicative of radio resources of each of the at least two cells in an uplink, UL, of the radio communication and/or on a physical UL shared channel, PUSCH, of the radio communication; and/or

further comprising or initiating the step of transmitting data, to the at least two cells of the RAN (1111), using the respective radio resources of the at least two cells in an uplink, UL; and/or

wherein the resource allocation for each of the at least two cells is indicative of radio resources of each of the at least two cells in a downlink, DL, of the radio communication and/or on a physical DL shared channel, PDSCH of the radio communication; and/or

further comprising or initiating the step of receiving data, from the at least two cells of the RAN (1111), on the respective radio resources of the at least two cells in a downlink, DL; and/or

wherein the resource allocation is indicative of radio resources in the time domain of the radio communication; and/or

wherein the resource allocation is indicative of radio resources of each of the at least two cells of the RAN (1111) that overlap in time; and/or

wherein the resource allocation is indicative of the radio resources relative to a time slot of the network node (200; 1000; 1112; 1220) in which the control information is received (304); and/or

wherein the resource allocation is indicative of a slot of the radio resources by means of a slot offset relative to a time slot in which the control information is received (304), and wherein the resource allocation is indicative of a start symbol within the slot of the radio resources and a length of the radio resources in the time domain; and/or

wherein the radio resources of the at least two cells of the RAN are different in at least one of a frequency domain and a spatial domain.

7. The method (300) of any one of claims 1 to 6, wherein the at least one table comprises as the at least two alternatives

(i) at least two different states or at least two different values of a rate matching indicator and/or

(ii) at least two different states or at least two different values of a zero power channel state information reference signal, ZP CSI-RS, trigger as the scheduling information or as part of scheduling information; and/or

wherein the configuration information comprises different sets of the at least two alternatives of the resource allocation for each of the at least two cells.

8. The method (300) of any one of claims 1 to 7, wherein the configuration information or the control information or a further control message from the network node (200; 1000; 1112; 1220) comprises an indicator (710) for selectively enabling and disabling cross-carrier scheduling for the at least two cells or an indicator (710) for selectively enabling and disabling multi-cell scheduling for the at least two cells; and/or

wherein the at least two cells comprise at least one secondary cell, SCell, and further comprise one primary cell, PCell, or one primary secondary cell, PSCell, or one special cell, spCell; and/or

wherein the radio communication with the radio device (100; 900; 1191; 1192; 1230) comprises a dual connectivity, DC, of the radio device (100; 900; 1191; 1192; 1230) with a master cell group, MCG, and a secondary cell group, SCG, of the RAN (1111), the SCG comprising the at least two cells.

9. The method (300) of any one of claims 1 to 8, wherein the control information is received (304) on a first layer of a protocol stack of the radio communication and the configuration information is received (302) on a second layer of the protocol stack of the radio communication, the second layer being above the first layer in the protocol stack; and/or

wherein the control information comprises a single value of the reference, the single value being indicative of one of the at least two alternatives for each of the at least two cells; and/or

wherein the control information comprises a bit field or one or more bits as the reference being jointly indicative of one of the at least two alternatives for each of the at least two cells.

10. A method (400) of transmitting scheduling information to a radio device (100; 900; 1191; 1192; 1230) from a network node (200; 1000; 1112; 1220) of a radio access network, RAN, (1111) in radio communication with the radio device (100; 900; 1191; 1192; 1230) through at least two cells, the method (400) comprising or initiating the steps of:

transmitting (402) configuration information to the radio device (100; 900; 1191; 1192; 1230), the configuration information being indicative of at least one table comprising at least two alternatives of the scheduling information for each of the at least two cells; and

transmitting (404) control information to the radio device (100; 900; 1191; 1192; 1230), the control information being indicative of a reference to one of the at least two alternatives of the scheduling information for each of the at least two cells.

11. The method of claim 10, further comprising the features or steps of any one of claims 2 to 9.

12. A computer program product comprising program code portions for performing the steps of any one of the claims 1 to 9 when the program code portion are executed on one or more processors (904, 1238) of a radio device (100; 900, 1235), or the steps of any of the claims 10 to 11 when the program code portion are executed on one or more processors (1004, 1228) of a network node (200; 1000, 1225).

13. A radio device (100; 900; 1191; 1192; 1230) for receiving scheduling information at the radio device (100; 900; 1191; 1192; 1230) from a network node (200; 1000; 1112; 1220) of a radio access network, RAN, (1111) in radio communication with the radio device (100; 900; 1191; 1192; 1230) through at least two cells, the radio device (100; 900; 1191; 1192; 1230) configured to:

receive configuration information from the network node (200; 1000; 1112; 1220), the configuration information being indicative of at least one table comprising at least two alternatives of the scheduling information for each of the at least two cells; and

receive control information from the network node (200; 1000; 1112; 1220), the control information being indicative of a reference to one of the at least two alternatives of the scheduling information for each of the at least two cells.

14. A user equipment, UE, (100; 900; 1191; 1192; 1230) for receiving scheduling information at the UE (100; 900; 1191; 1192; 1230) from a network node (200; 1000; 1112; 1220) of a radio access network, RAN, (1111) in radio communication with the UE (100; 900; 1191; 1192; 1230) through at least two cells, the UE configured to communicate with a base station (200; 1000; 1112; 1220) or with a radio device functioning as a gateway, the UE (100; 900; 1191; 1192; 1230) comprising a radio interface (1102; 1437) and processing circuitry (1104; 1438) configured to:

receive configuration information from the network node (200; 1000; 1112; 1220), the configuration information being indicative of at least one table comprising at least two alternatives of the scheduling information for each of the at least two cells; and

receive control information from the network node (200; 1000; 1112; 1220), the control information being indicative of a reference to one of the at least two alternatives of the scheduling information for each of the at least two cells.

15. A network node (200; 1000; 1112; 1220) for transmitting scheduling information to a radio device (100; 900; 1191; 1192; 1230) from the network node (200; 1000; 1112; 1220) of a radio access network, RAN, (1111) in radio communication with the radio device (100; 900; 1191; 1192; 1230) through at least two cells, the network node (200; 1000; 1112; 1220) configured to

transmit configuration information to the radio device (100; 900; 1191; 1192; 1230), the configuration information being indicative of at least one table comprising at least two alternatives of the scheduling information for each of the at least two cells; and

transmit control information to the radio device (100; 900; 1191; 1192; 1230), the control information being indicative of a reference to one of the at least two alternatives of the scheduling information for each of the at least two cells.

16. A base station (200; 1000; 1112; 1220) for transmitting scheduling information to a radio device (100; 900; 1191; 1192; 1230) from the base station (200; 1000; 1112; 1220) of a radio access network, RAN, (1111) in radio communication with the radio device (100; 900; 1191; 1192; 1230) through at least two cells, the base station (200; 1000; 1112; 1220) configured to communicate with a user equipment, UE, the base station (200; 1000; 1112; 1220) comprising a radio interface (1202; 1427) and processing circuitry (1204; 1428) configured to:

transmit configuration information to the radio device (100; 900; 1191; 1192; 1230), the configuration information being indicative of at least one table comprising at least two alternatives of the scheduling information for each of the at least two cells; and

transmit control information to the radio device (100; 900; 1191; 1192; 1230), the control information being indicative of a reference to one of the at least two alternatives of the scheduling information for each of the at least two cells.

17. A communication system (1100; 1200) including a host computer (1130; 1210), a user equipment, UE, (100, 900, 1191, 1192, 1230) and a base station (200, 1000, 1112, 1220) according to independent claim 16, the host computer (1130; 1210) comprising:

processing circuitry (1218) configured to provide user data; and

a communication interface (1216) configured to forward (1310) user data to a cellular or ad hoc radio network (1111) for transmission to the UE (100; 900; 1191; 1192; 1230), wherein the UE (100; 900; 1191; 1192; 1230) comprises a radio interface (902; 1237) and processing circuitry (904; 1238), the processing circuitry (904; 1238) of the UE (100; 900; 1191; 1192; 1230) being configured to execute the steps of any one of claims 1 to 9.

**Patentansprüche**

1. Verfahren (300) zum Empfangen von Dispositionsinformationen an einer Funkvorrichtung (100; 900; 1191; 1192; 1230) von einem Netzwerkknoten (200; 1000; 1112; 1220) eines Funkzugangsnetzwerks, RAN, (1111) in Funkkommunikation mit der Funkvorrichtung (100; 900; 1191; 1192; 1230) über mindestens zwei Zellen, wobei das Verfahren (300) die folgenden Schritte umfasst oder initiiert:

Empfangen (302) von Konfigurationsinformationen von dem Netzwerkknoten (200; 1000; 1112; 1220), wobei die Konfigurationsinformationen mindestens eine Tabelle angeben, die mindestens zwei Alternativen der Dispositionsinformationen für jede der mindestens zwei Zellen umfasst; und

Empfangen (304) von Steuerinformationen von dem Netzwerkknoten (200; 1000; 1112; 1220), wobei die Steuerinformationen einen Verweis auf eine der mindestens zwei Alternativen der Dispositionsinformationen für jede der mindestens zwei Zellen angeben.

2. Verfahren (300) nach Anspruch 1, wobei die Steuerinformationen eine Downlink-Steuerinformationsnachricht, DCI-Nachricht, sind oder in einer solchen empfangen werden.

3. Verfahren (300) nach Anspruch 1, wobei die Steuerinformationen mehrere Downlink-Steuerinformationsnachrichten, DCI-Nachrichten, sind oder in solchen empfangen werden.

4. Verfahren (300) nach einem der Ansprüche 1 bis 3, wobei der Verweis ein Zeilenindex ist, der eine Zeile der mindestens einen Tabelle angibt; und/oder

wobei die mindestens eine Tabelle eine erste Tabelle, die die mindestens zwei Alternativen der Dispositionsinformationen für eine erste Zelle der mindestens zwei Zellen umfasst, wobei der Verweis auf die eine der mindestens zwei Alternativen der Dispositionsinformationen in der ersten Tabelle die Dispositionsinformationen der ersten Zelle angibt, und eine zweite Tabelle umfasst, die die mindestens zwei Alternativen der Dispositionsinformationen für eine zweite Zelle der mindestens zwei Zellen umfasst, wobei der Verweis auf die eine der mindestens zwei Alternativen der Dispositionsinformationen in der zweiten Tabelle die Dispositionsinformationen der zweiten Zelle angibt; und/oder

wobei eine Tabelle der mindestens einen Tabelle eine erste Spalte, die die mindestens zwei Alternativen der Dispositionsinformationen für eine erste Zelle der mindestens zwei Zellen umfasst, wobei der Verweis auf die eine der mindestens zwei Alternativen der Dispositionsinformationen in der ersten Spalte die Dispositionsinformationen der ersten Zelle angibt, und eine zweite Spalte umfasst, die die mindestens zwei Alternativen der Dispositionsinformationen für eine zweite Zelle der mindestens zwei Zellen umfasst, wobei der Verweis auf die eine der mindestens zwei Alternativen der Dispositionsinformationen in der zweiten Spalte die Dispositionsinformationen der zweiten Zelle angibt; und/oder

wobei die mindestens eine Tabelle eine erste Verweistabelle zum Zuordnen des Verweises der Steuerinformationen zu einem ersten Verweis und einem zweiten Verweis, eine erste Tabelle, die die mindestens zwei Alternativen der Dispositionsinformationen für eine erste Zelle der mindestens zwei Zellen umfasst, wobei der erste Verweis die eine der mindestens zwei Alternativen der Dispositionsinformationen in der ersten Tabelle als die Dispositionsinformationen der ersten Zelle bestimmt, und eine zweite Tabelle umfasst, die die mindestens zwei Alternativen der Dispositionsinformationen für eine zweite Zelle der mindestens zwei Zellen umfasst, wobei der zweite Verweis die eine der mindestens zwei Alternativen der Dispositionsinformationen in der zweiten Tabelle als die Dispositionsinformationen der zweiten Zelle bestimmt; und/oder

wobei die Konfigurationsinformationen mindestens eine Zuweisungsliste als die mindestens eine Tabelle umfassen; und/oder

wobei die mindestens zwei Alternativen der Dispositionsinformationen mindestens zwei Alternativen einer Ressourcenzuweisung umfassen; und/oder

wobei die Steuerinformationen ein Zeitdomänenressourcenzuweisungsfeld, TDRA-Feld, umfassen, das den Verweis angibt; und/oder

wobei die Konfigurationsinformationen eine oder mehrere Funkressourcensteuernachrichten, RRC-Nachrichten, sind oder in solchen empfangen werden; und/oder

wobei die Steuerinformationen auf einem physikalischen Downlink-Steuerkanal, PDCCH, der Funkkommunikation empfangen werden.

5. Verfahren (300) nach einem der Ansprüche 1 bis 4, wobei die Dispositionsinformationen für jede der mindestens zwei Zellen eine Ressourcenzuweisung für jede der mindestens zwei Zellen sind oder umfassen.

6. Verfahren (300) nach Anspruch 5, wobei die Ressourcenzuweisung für jede der mindestens zwei Zellen Funkressourcen jeder der mindestens zwei Zellen in einem Uplink, UL, der Funkkommunikation und/oder auf einem gemeinsamen physikalischen UL-Kanal, PUSCH, der Funkkommunikation angibt; und/oder

ferner umfassend oder initiierend den Schritt des Sendens von Daten an die mindestens zwei Zellen des RAN (1111) unter Verwendung jeweiliger Funkressourcen der mindestens zwei Zellen in einem Uplink, UL; und/oder wobei die Ressourcenzuweisung für jede der mindestens zwei Zellen Funkressourcen jeder der mindestens zwei Zellen in einem Downlink, DL, der Funkkommunikation und/oder auf einem gemeinsamen physikalischen DL-Kanal, PDSCH, der Funkkommunikation angibt; und/oder

ferner umfassend oder initiierend den Schritt des Empfangens von Daten von den mindestens zwei Zellen des RAN (1111) auf den jeweiligen Funkressourcen der mindestens zwei Zellen in einem Downlink, DL; und/oder wobei die Ressourcenzuweisung Funkressourcen in der Zeitdomäne der Funkkommunikation angibt; und/oder wobei die Ressourcenzuweisung Funkressourcen jeder der mindestens zwei Zellen des RAN (1111) angibt, die einander zeitlich überlappen; und/oder

wobei die Ressourcenzuweisung die Funkressourcen relativ zu einem Zeitschlitz des Netzwerkknotens (200; 1000; 1112; 1220) angibt, in dem die Steuerinformationen empfangen werden (304); und/oder wobei die Ressourcenzuweisung einen Schlitz der Funkressourcen mittels eines Schlitzversatzes relativ zu einem Zeitschlitz angibt, in dem die Steuerinformationen empfangen werden (304), und wobei die Ressourcenzuweisung ein Startsymbol innerhalb des Schlitzes der Funkressourcen und eine Länge der Funkressourcen in der Zeitdomäne angibt; und/oder

wobei sich die Funkressourcen der mindestens zwei Zellen des RAN in mindestens einer von einer Frequenzdomäne und einer Raumdomäne unterscheiden.

7. Verfahren (300) nach einem der Ansprüche 1 bis 6, wobei die mindestens eine Tabelle Folgendes als die mindestens zwei Alternativen umfasst:

(i) mindestens zwei verschiedene Zustände oder mindestens zwei verschiedene Werte eines Ratenanpassungsindikators und/oder

(ii) mindestens zwei verschiedene Zustände oder mindestens zwei verschiedene Werte eines Auslösers eines Nullleistungs-Kanalzustandsinformations-Referenzsignals, ZP-CSI-RS, als die Dispositionsinformationen oder als Teil der Dispositionsinformationen; und/oder

wobei die Konfigurationsinformationen verschiedene Sätze der mindestens zwei Alternativen der Ressourcenzuweisung für jede der mindestens zwei Zellen umfassen.

8. Verfahren (300) nach einem der Ansprüche 1 bis 7, wobei die Konfigurationsinformationen oder die Steuerinformationen oder eine weitere Steuernachricht von dem Netzwerkknoten (200; 1000; 1112; 1220) einen Indikator (710) zum selektiven Aktivieren und Deaktivieren von trägerübergreifender Disposition für die mindestens zwei Zellen oder einen Indikator (710) zum selektiven Aktivieren und Deaktivieren von Mehrzellen-Disposition für die mindestens zwei Zellen umfassen; und/oder

wobei die mindestens zwei Zellen mindestens eine Sekundärzelle, SCell, umfassen und ferner eine Primärzelle, PCell, oder eine primäre Sekundärzelle, PSCell, oder eine Spezialzelle, spCell, umfassen; und/oder
wobei die Funkkommunikation mit der Funkvorrichtung (100; 900; 1191; 1192; 1230) eine Dualkonnektivität, DC, der Funkvorrichtung (100; 900; 1191; 1192; 1230) mit einer Master-Zellengruppe, MCG, und einer Sekundärzellengruppe, SCG, des RAN (1111) umfasst, wobei die SCG die mindestens zwei Zellen umfasst.

9. Verfahren (300) nach einem der Ansprüche 1 bis 8, wobei die Steuerinformationen auf einer ersten Schicht eines Protokollstapels der Funkkommunikation empfangen werden (304) und die Konfigurationsinformationen auf einer zweiten Schicht des Protokollstapels der Funkkommunikation empfangen werden (302), wobei sich die zweite Schicht in dem Protokollstapel über der ersten Schicht befindet; und/oder

wobei die Steuerinformationen einen einzigen Wert des Verweises umfassen, wobei der einzige Wert eine der mindestens zwei Alternativen für jede der mindestens zwei Zellen angibt; und/oder
wobei die Steuerinformationen ein Bitfeld oder ein oder mehrere Bits als den Verweis umfassen, die zusammen eine der mindestens zwei Alternativen für jede der mindestens zwei Zellen angeben.

10. Verfahren (400) zum Senden von Dispositionsinformationen von einem Netzwerkknoten (200; 1000; 1112; 1220) eines Funkzugangsnetzwerks, RAN, (1111) in Funkkommunikation mit einer Funkvorrichtung (100; 900; 1191; 1192; 1230) über mindestens zwei Zellen an die Funkvorrichtung (100; 900; 1191; 1192; 1230), wobei das Verfahren (400) die folgenden Schritte umfasst oder initiiert:

Senden (402) von Konfigurationsinformationen an die Funkvorrichtung (100; 900; 1191; 1192; 1230), wobei die Konfigurationsinformationen mindestens eine Tabelle angeben, die mindestens zwei Alternativen der Dispositionsinformationen für jede der mindestens zwei Zellen umfasst; und
Senden (404) von Steuerinformationen an die Funkvorrichtung (100; 900; 1191; 1192; 1230), wobei die Steuerinformationen einen Verweis auf eine der mindestens zwei Alternativen der Dispositionsinformationen für jede der mindestens zwei Zellen angeben.

11. Verfahren nach Anspruch 10, ferner umfassend die Merkmale oder Schritte nach einem der Ansprüche 2 bis 7.

12. Computerprogrammprodukt, umfassend Programmcodeabschnitte zum Ausführen der Schritte nach einem der Ansprüche 1 bis 7, wenn die Programmcodeabschnitte auf einem oder mehreren Prozessoren (904, 1238) einer Funkvorrichtung (100; 900, 1235) ausgeführt werden, oder der Schritte nach einem der Ansprüche 8 bis 9, wenn die Programmcodeabschnitte auf einem oder mehreren Prozessoren (1004, 1228) eines Netzwerkknotens (200; 1000, 1225) ausgeführt werden.

13. Funkvorrichtung (100; 900; 1191; 1192; 1230) zum Empfangen von Dispositionsinformationen an der Funkvorrichtung (100; 900; 1191; 1192; 1230) von einem Netzwerkknoten (200; 1000; 1112; 1220) eines Funkzugangsnetzwerks, RAN, (1111) in Funkkommunikation mit der Funkvorrichtung (100; 900; 1191; 1192; 1230) über mindestens zwei Zellen, wobei die Funkvorrichtung (100; 900; 1191; 1192; 1230) zu Folgendem ausgelegt ist:

Empfangen von Konfigurationsinformationen von dem Netzwerkknoten (200; 1000; 1112; 1220), wobei die Konfigurationsinformationen mindestens eine Tabelle angeben, die mindestens zwei Alternativen der Dispositionsinformationen für jede der mindestens zwei Zellen umfasst; und
Empfangen von Steuerinformationen von dem Netzwerkknoten (200; 1000; 1112; 1220), wobei die Steuerinformationen einen Verweis auf eine der mindestens zwei Alternativen der Dispositionsinformationen für jede der mindestens zwei Zellen angeben.

14. Benutzereinrichtung, UE, (100; 900; 1191; 1192; 1230) zum Empfangen von Dispositionsinformationen an der UE (100; 900; 1191; 1192; 1230) von einem Netzwerkknoten (200; 1000; 1112; 1220) eines Funkzugangsnetzwerks, RAN, (1111) in Funkkommunikation mit der Funkvorrichtung (100; 900; 1191; 1192; 1230) über mindestens zwei Zellen, wobei die UE dazu ausgelegt ist, mit einer Basisstation (200; 1000; 1112; 1220) oder mit einer Funkvorrichtung zu kommunizieren, die als Gateway fungiert, wobei die UE (100; 900; 1191; 1192; 1230) eine Funkschnittstelle (1102; 1437) und Verarbeitungsschaltungsanordnung (1104; 1438) umfasst, die zu Folgendem ausgelegt ist:

Empfangen von Konfigurationsinformationen von dem Netzwerkknoten (200; 1000; 1112; 1220), wobei die Konfigurationsinformationen mindestens eine Tabelle angeben, die mindestens zwei Alternativen der Dispositionsinformationen für jede der mindestens zwei Zellen umfasst; und
Empfangen von Steuerinformationen von dem Netzwerkknoten (200; 1000; 1112; 1220), wobei die Steuerinformationen einen Verweis auf eine der mindestens zwei Alternativen der Dispositionsinformationen für jede der mindestens zwei Zellen angeben.

15. Netzwerkknoten (200; 1000; 1112; 1220) zum Senden von Dispositionsinformationen von dem Netzwerkknoten (200; 1000; 1112; 1220) eines Funkzugangsnetzwerks, RAN, (1111) in Funkkommunikation mit einer Funkvorrichtung (100; 900; 1191; 1192; 1230) über mindestens zwei Zellen an die Funkvorrichtung (100; 900; 1191; 1192; 1230), wobei der Netzwerkknoten (200; 1000; 1112; 1220) zu Folgendem ausgelegt ist:

Senden von Konfigurationsinformationen an die Funkvorrichtung (100; 900; 1191; 1192; 1230), wobei die Konfigurationsinformationen mindestens eine Tabelle angeben, die mindestens zwei Alternativen der Dispositionsinformationen für jede der mindestens zwei Zellen umfasst; und
Senden von Steuerinformationen an die Funkvorrichtung (100; 900; 1191; 1192; 1230), wobei die Steuerinformationen einen Verweis auf eine der mindestens zwei Alternativen der Dispositionsinformationen für jede der mindestens zwei Zellen angeben.

16. Basisstation (200; 1000; 1112; 1220) zum Senden von Dispositionsinformationen von der Basisstation (200; 1000; 1112; 1220) eines Funkzugangsnetzwerks, RAN, (1111) in Funkkommunikation mit einer Funkvorrichtung (100; 900; 1191; 1192; 1230) über mindestens zwei Zellen an die Funkvorrichtung (100; 900; 1191; 1192; 1230), wobei die Basisstation (200; 1000; 1112; 1220) dazu ausgelegt ist, mit einer Benutzereinrichtung, UE, zu kommunizieren, wobei die Basisstation (200; 1000; 1112; 1220) eine Funkschnittstelle (1202; 1427) und Verarbeitungsschaltungsanordnung (1204; 1428) umfasst, die zu Folgendem ausgelegt ist:

Senden von Konfigurationsinformationen an die Funkvorrichtung (100; 900; 1191; 1192; 1230), wobei die Konfigurationsinformationen mindestens eine Tabelle angeben, die mindestens zwei Alternativen der Dispositionsinformationen für jede der mindestens zwei Zellen umfasst; und
Senden von Steuerinformationen an die Funkvorrichtung (100; 900; 1191; 1192; 1230), wobei die Steuerinformationen einen Verweis auf eine der mindestens zwei Alternativen der Dispositionsinformationen für jede der mindestens zwei Zellen angeben.

17. Kommunikationssystem (1100; 1200), umfassend einen Hostcomputer (1130; 1210), eine Benutzereinrichtung, UE, (100, 900, 1191, 1192, 1230) und eine Basisstation (200, 1000, 1112, 1220) nach dem unabhängigen Anspruch 14, wobei der Hostcomputer (1130; 1210) Folgendes umfasst:

Verarbeitungsschaltungsanordnung (1218), die zum Bereitstellen von Benutzerdaten ausgelegt ist;
eine Kommunikationsschnittstelle (1216), die zum Weiterleiten (1310) von Benutzerdaten an ein Zellular- oder Ad-hoc-Funknetzwerk (1111) zur Übertragung an die UE (100; 900; 1191; 1192; 1230) ausgelegt ist, wobei die UE (100; 900; 1191; 1192; 1230) eine Funkschnittstelle (902; 1237) und Verarbeitungsschaltungsanordnung (904; 1238) umfasst, wobei die Verarbeitungsschaltungsanordnung (904; 1238) der UE (100; 900; 1191; 1192; 1230) zum Ausführen der Schritte nach einem der Ansprüche 1 bis 7 ausgelegt ist.

**Revendications**

1. Procédé (300) de réception d'informations de planification au niveau d'un dispositif radio (100 ; 900 ; 1191 ; 1192 ; 1230) depuis un nœud de réseau (200 ; 1000 ; 1112 ; 1220) d'un réseau d'accès radio, RAN, (1111) en communication radio avec le dispositif radio (100 ; 900 ; 1191 ; 1192 ; 1230) par l'intermédiaire d'au moins deux cellules, le procédé (300) comprenant ou initiant les étapes suivantes :

la réception (302) d'informations de configuration depuis le nœud de réseau (200 ; 1000 ; 1112 ; 1220), les informations de configuration indiquant au moins une table comprenant au moins deux alternatives des informations de planification pour chacune parmi les au moins deux cellules ; et

la réception (304) d'informations de commande depuis le nœud de réseau (200 ; 1000 ; 1112 ; 1220), les informations de commande indiquant une référence à une parmi les au moins deux alternatives des informations de planification pour chacune parmi les au moins deux cellules.

2. Procédé (300) selon la revendication 1, dans lequel les informations de commande sont, ou sont reçues dans, un message d'informations de commande de liaison descendante, DCI.

3. Procédé (300) selon la revendication 1, dans lequel les informations de commande sont, ou sont reçues dans, plusieurs messages d'informations de commande de liaison descendante, DCI.

4. Procédé (300) selon l'une quelconque des revendications 1 à 3, dans lequel la référence est un indice de rangée indiquant une rangée de l'au moins une table ; et/ou

dans lequel l'au moins une table comprend une première table comprenant les au moins deux alternatives des informations de planification pour une première cellule parmi les au moins deux cellules, la référence à l'une parmi les au moins deux alternatives des informations de planification dans la première table indiquant les informations de planification de la première cellule, et une deuxième table comprenant les au moins deux alternatives des informations de planification pour une deuxième cellule des au moins deux cellules, la référence à l'une parmi les au moins deux alternatives des informations de planification dans la deuxième table indiquant les informations de planification de la deuxième cellule ; et/ou

dans lequel une table parmi l'au moins une table comprend une première colonne comprenant les au moins deux alternatives des informations de planification pour une première cellule parmi les au moins deux cellules, la référence à l'une parmi les au moins deux alternatives des informations de planification dans la première colonne indiquant les informations de planification de la première cellule, et une deuxième colonne comprenant les au moins deux alternatives des informations de planification pour une deuxième cellule parmi les au moins deux cellules, la référence à l'une parmi les au moins deux alternatives des informations de planification dans la deuxième colonne indiquant les informations de planification de la deuxième cellule ; et/ou

dans lequel l'au moins une table comprend une table de référence pour mettre la référence des informations de commande en correspondance avec une première référence et une deuxième référence, une première table comprenant les au moins deux alternatives des informations de planification pour une première cellule parmi les au moins deux cellules, la première référence déterminant l'une parmi les au moins deux alternatives des informations de planification dans la première table en tant que les informations de planification de la première cellule, et une deuxième table comprenant les au moins deux alternatives des informations de planification pour une deuxième cellule parmi les au moins deux cellules, la deuxième référence déterminant l'une parmi les au moins deux alternatives des informations de planification dans la deuxième table en tant que les informations de planification de la deuxième cellule ; et/ou

dans lequel les informations de configuration comprennent au moins une liste d'allocation en tant que l'au moins une table ; et/ou

dans lequel les au moins deux alternatives des informations de planification comprennent au moins deux alternatives d'une allocation de ressources ; et/ou

dans lequel les informations de commande comprennent un champ d'attribution de ressources de domaine temporel, TDRA, indiquant la référence ; et/ou

dans lequel les informations de configuration sont, ou sont reçues dans, un ou plusieurs messages de commande de ressources radio, RRC ; et/ou

dans lequel les informations de commande sont reçues sur un canal de commande de liaison descendante physique, PDCCH, de la communication radio.

5. Procédé (300) selon l'une quelconque des revendications 1 à 4, dans lequel les informations de planification pour chacune parmi les au moins deux cellules sont ou comprennent une allocation de ressources pour chacune parmi les au moins deux cellules.

6. Procédé (300) selon la revendication 5, dans lequel l'allocation de ressources pour chacune parmi les au moins deux cellules indique des ressources radio de chacune parmi les au moins deux cellules dans une liaison montante, UL, de la communication radio et/ou sur un canal partagé UL physique, PUSCH, de la communication radio ; et/ou

comprenant ou initiant en outre l'étape de transmission de données aux au moins deux cellules du RAN (1111) à l'aide des ressources radio respectives des au moins deux cellules dans une liaison montante, UL ; et/ou

dans lequel l'allocation de ressources pour chacune parmi les au moins deux cellules indique des ressources radio de chacune parmi les au moins deux cellules dans une liaison descendante, DL, de la communication radio et/ou sur un canal partagé DL physique, PDSCH, de la communication radio ; et/ou

comprenant ou initiant en outre l'étape de réception de données, depuis les au moins deux cellules du RAN (1111), sur les ressources radio respectives des au moins deux cellules dans une liaison descendante, DL ; et/ou

dans lequel l'allocation de ressources indique des ressources radio dans le domaine temporel de la communication radio ; et/ou

dans lequel l'allocation de ressources indique des ressources radio de chacune parmi les au moins deux cellules du RAN (1111) qui se chevauchent dans le temps ; et/ou

dans lequel l'allocation de ressources indique les ressources radio par rapport à un créneau temporel du nœud de réseau (200 ; 1000 ; 1112 ; 1220) dans lequel les informations de commande sont reçues (304) ; et/ou

dans lequel l'allocation de ressources indique un créneau des ressources radio au moyen d'un décalage de créneau par rapport à un créneau temporel dans lequel les informations de commande sont reçues (304), et dans lequel l'allocation de ressources indique un symbole de début dans le créneau des ressources radio et une longueur des ressources radio dans le domaine temporel ; et/ou

dans lequel les ressources radio des au moins deux cellules du RAN sont différentes dans au moins l'un parmi un domaine fréquentiel et un domaine spatial.

7. Procédure (300) selon l'une quelconque des revendications 1 à 6, dans lequel l'au moins une table comprend en tant que les au moins deux alternatives :

(i) au moins deux états différents ou au moins deux valeurs différentes d'un indicateur d'adaptation de débit et/ou
(ii) au moins deux états différents ou au moins deux valeurs différentes d'un déclenchement de signal de référence d'informations d'état de canal de puissance nulle, ZP CSI-RS, en tant que les informations de planification ou dans le cadre d'informations de planification ; et/ou

dans lequel les informations de configuration comprennent des ensembles différents des au moins deux alternatives de l'allocation de ressources pour chacune parmi les au moins deux cellules.

8. Procédé (300) selon l'une quelconque des revendications 1 à 7, dans lequel les informations de configuration ou les informations de commande ou un autre message de commande émanant du nœud de réseau (200 ; 1000 ; 1112 ; 1220) comprennent un indicateur (710) pour activer et désactiver sélectivement une planification inter-porteuses pour les au moins deux cellules ou un indicateur (710) pour activer et désactiver sélectivement une planification multi-cellules pour les au moins deux cellules ; et/ou

dans lequel les au moins deux cellules comprennent au moins une cellule secondaire, SCell, et comprennent en outre une cellule primaire, PCell, ou une cellule primaire secondaire, PSCell, ou une cellule spéciale, spCell ; et/ou

dans lequel la communication radio avec le dispositif radio (100 ; 900 ; 1191 ; 1192 ; 1230) comprend une connectivité double, DC, du dispositif radio (100 ; 900 ; 1191 ; 1192 ; 1230) avec un groupe de cellules maître, MCG, et un groupe de cellules secondaires, SCG, du RAN (1111), le SCG comprenant les au moins deux cellules.

9. Procédé (300) selon l'une quelconque des revendications 1 à 8, dans lequel les informations de commande sont reçues (304) sur une première couche d'une pile de protocoles de la communication radio et les informations de configuration sont reçues (302) sur une deuxième couche de la pile de protocoles de la communication radio, la deuxième couche étant au-dessus de la première couche dans la pile de protocoles ; et/ou

dans lequel les informations de commande comprennent une valeur unique de la référence, la valeur unique indiquant l'une parmi les au moins deux alternatives pour chacune parmi les au moins deux cellules ; et/ou
dans lequel les informations de commande comprennent un champ binaire ou un ou plusieurs bits en tant que la référence indiquant conjointement l'une parmi les au moins deux alternatives pour chacune parmi les au moins deux cellules.

10. Procédé (400) de transmission d'informations de planification à un dispositif radio (100 ; 900 ; 1191 ; 1192 ; 1230) depuis un nœud de réseau (200 ; 1000 ; 1112 ; 1220) d'un réseau d'accès radio, RAN, (1111) en communication radio avec le dispositif radio (100 ; 900 ; 1191 ; 1192 ; 1230) par l'intermédiaire d'au moins deux cellules, le procédé (400) comprenant ou initiant les étapes suivantes :

la transmission (402) d'informations de configuration au dispositif radio (100 ; 900 ; 1191 ; 1192 ; 1230), les informations de configuration indiquant au moins une table comprenant au moins deux alternatives des informations de planification pour chacune parmi les au moins deux cellules ; et

la transmission (404) d'informations de commande au dispositif radio (100 ; 900 ; 1191 ; 1192 ; 1230), les informations de commande indiquant une référence à une parmi les au moins deux alternatives des informations de planification pour chacune parmi les au moins deux cellules.

11. Procédé selon la revendication 10, comprenant en outre les caractéristiques ou étapes selon l'une quelconque des revendications 2 à **9.**

12. Produit programme informatique comprenant des parties de code de programme pour réaliser les étapes selon l'une quelconque des revendications 1 à 9 lorsque les parties de code de programme sont exécutées sur un ou plusieurs processeurs (904, 1238) d'un dispositif radio (100 ; 900, 1235), ou les étapes selon l'une quelconque des revendications 10 et 11 lorsque les parties de code de programme sont exécutées sur un ou plusieurs processeurs (1004, 1228) d'un nœud de réseau (200 ; 1000, 1225).

13. Dispositif radio (100 ; 900 ; 1191 ; 1192 ; 1230) destiné à recevoir des informations de planification au niveau du dispositif radio (100 ; 900 ; 1191 ; 1192 ; 1230) depuis un nœud de réseau (200 ; 1000 ; 1112 ; 1220) d'un réseau d'accès radio, RAN, (1111) en communication radio avec le dispositif radio (100 ; 900 ; 1191 ; 1192 ; 1230) par l'intermédiaire d'au moins deux cellules, le dispositif radio (100 ; 900 ; 1191 ; 1192 ; 1230) étant configuré pour :

recevoir des informations de configuration depuis le nœud de réseau (200 ; 1000 ; 1112 ; 1220), les informations de configuration indiquant au moins une table comprenant au moins deux alternatives des informations de planification pour chacune parmi les au moins deux cellules ; et

recevoir des informations de commande depuis le nœud de réseau (200 ; 1000 ; 1112 ; 1220), les informations de commande indiquant une référence à une parmi les au moins deux alternatives des informations de planification pour chacune parmi les au moins deux cellules.

14. Equipement utilisateur, UE, (100 ; 900 ; 1191 ; 1192 ; 1230) destiné à recevoir des informations de planification au niveau de l'UE (100 ; 900 ; 1191 ; 1192 ; 1230) depuis un nœud de réseau (200 ; 1000 ; 1112 ; 1220) d'un réseau d'accès radio, RAN, (1111) en communication radio avec l'UE (100 ; 900 ; 1191 ; 1192 ; 1230) par l'intermédiaire d'au moins deux cellules, l'UE étant configuré pour communiquer avec une station de base (200 ; 1000 ; 1112 ; 1220) ou avec un dispositif radio fonctionnant en tant que passerelle, l'UE (100 ; 900 ; 1191 ; 1192 ; 1230) comprenant une interface radio (1102 ; 1437) et une circuiterie de traitement (1104 ; 1438) configurée pour :

recevoir des informations de configuration depuis le nœud de réseau (200 ; 1000 ; 1112 ; 1220), les informations de configuration indiquant au moins une table comprenant au moins deux alternatives des informations de planification pour chacune parmi les au moins deux cellules ; et

recevoir des informations de commande depuis le nœud de réseau (200 ; 1000 ; 1112 ; 1220), les informations de commande indiquant une référence à une parmi les au moins deux alternatives des informations de planification pour chacune parmi les au moins deux cellules.

15. Nœud de réseau (200 ; 1000 ; 1112 ; 1220) destiné à transmettre des informations de planification à un dispositif radio (100 ; 900 ; 1191 ; 1192 ; 1230) depuis le nœud de réseau (200 ; 1000 ; 1112 ; 1220) d'un réseau d'accès radio, RAN, (1111) en communication radio avec le dispositif radio (100 ; 900 ; 1191 ; 1192 ; 1230) par l'intermédiaire d'au moins deux cellules, le nœud de réseau (200 ; 1000 ; 1112 ; 1220) étant configuré pour :

transmettre des informations de configuration au dispositif radio (100 ; 900 ; 1191 ; 1192 ; 1230), les informations de configuration indiquant au moins une table comprenant au moins deux alternatives des informations de planification pour chacune parmi les au moins deux cellules ; et

transmettre des informations de commande au dispositif radio (100 ; 900 ; 1191 ; 1192 ; 1230), les informations de commande indiquant une référence à une parmi les au moins deux alternatives des informations de planification pour chacune parmi les au moins deux cellules.

16. Station de base (200 ; 1000 ; 1112 ; 1220) destinée à transmettre des informations de planification à un dispositif radio (100 ; 900 ; 1191 ; 1192 ; 1230) depuis la station de base (200 ; 1000 ; 1112 ; 1220) d'un réseau d'accès radio, RAN, (1111) en communication radio avec le dispositif radio (100 ; 900 ; 1191 ; 1192 ; 1230) par l'intermédiaire d'au moins deux cellules, la station de base (200 ; 1000 ; 1112 ; 1220) étant configurée pour communiquer avec un équipement utilisateur, UE, la station de base (200 ; 1000 ; 1112 ; 1220) comprenant une interface radio (1202 ; 1427) et une circuiterie de traitement (1204 ; 1428) configurée pour :

transmettre des informations de configuration au dispositif radio (100 ; 900 ; 1191 ; 1192 ; 1230), les informations de configuration indiquant au moins une table comprenant au moins deux alternatives des informations de planification pour chacune parmi les au moins deux cellules ; et
transmettre des informations de commande au dispositif radio (100 ; 900 ; 1191 ; 1192 ; 1230), les informations de commande indiquant une référence à une parmi les au moins deux alternatives des informations de planification pour chacune parmi les au moins deux cellules.

17. Système de communication (1100 ; 1200) comportant un ordinateur hôte (1130 ; 1210), un équipement utilisateur, UE, (100, 900, 1191, 1192, 1230) et une station de base (200, 1000, 1112, 1200) selon la revendication indépendante 16, l'ordinateur hôte (1130 ; 1210) comprenant :

une circuiterie de traitement (1218) configurée pour fournir des données d'utilisateur ; et
une interface de communication (1216) configurée pour transférer (1310) des données d'utilisateur à un réseau radio cellulaire ou ad hoc (1111) pour une transmission à l'UE (100 ; 900 ; 1191 ; 1192 ; 1230), dans lequel l'UE (100 ; 900 ; 1191 ; 1192 ; 1230) comprend une interface radio (902 ; 1237) et une circuiterie de traitement (904 ; 1238), la circuiterie de traitement (904 ; 1238) de l'UE (100 ; 900 ; 1191 ; 1192 ; 1230) étant configurée pour exécuter les étapes selon l'une quelconque des revendications 1 à **9.**

<u>100</u>

| |
|---|
| Configuration Receiving Module ——— 102 |
| Control Receiving Module ——— 104 |

Fig. 1

<u>200</u>

| |
|---|
| Configuration Transmitting Module ——— 202 |
| Control Transmitting Module ——— 204 |

Fig. 2

300

| Receive configuration information from a network node of a RAN, the configuration information being indicative of at least one table comprising at least two alternatives of scheduling information for each of at least two cells of the RAN | — 302 |

| Receive control information from the network node, the control information being indicative of a reference to one of the at least two alternatives of the scheduling information for each of the at least two cells | — 304 |

Fig. 3

400

| Transmit configuration information from a radio device in radio communication with a RAN, the configuration information being indicative of at least one table comprising at least two alternatives of scheduling information for each of at least two cells of the RAN | — 402 |

| Transmit control information to the radio device, the control information being indicative of a reference to one of the at least two alternatives of the scheduling information for each of the at least two cells | — 404 |

Fig. 4

Fig. 5

Fig. 6

700

### Pcell

702

**servingcellconfig**

**pdsch-Configcommon**

> PDSCH-TimeDomainResourceAllocationList

**PDSCH-Config**

> RateMatching

> ZP-CSI-RS aperiodic-ZP-CSI-RS-ResourceSetsToAddModList

> For Single DCI-scheduling multiple cells
> TDRATable 2 for cell1
> Ratematching
> ZP-CSI-RS triggering

706

### Scell

704

**servingcellconfig**

**pdsch-Configcommon**

> PDSCH-TimeDomainResourceAllocationList

**PDSCH-Config**

> RateMatching

> ZP-CSI-RS aperiodic-ZP-CSI-RS-ResourceSetsToAddModList

> For Single DCI-scheduling multiple cells
> TDRATable 2 for cell2
> Ratematching
> ZP-CSI-RS triggering

708

**CrossCarrierSchedulingConfig**
own
other

710

Fig. 7

Fig. 8

900

Interface — 902

Processor(s) — 904
— 100
Memory — 906

Radio Device

Fig. 9

1000

Interface — 1002

Processor(s) — 1004
— 200
Memory — 1006

Network Node

Fig. 10

Fig. 11

1200

Fig. 12

BEGIN

1310
Host computer provides user data

1311
Host computer executes host application

1320
Host computer initiates transmission carrying the user data to the UE

1330
Base station transmits the user data

1340
UE executes client application

END

Fig. 13

BEGIN

1410
Host computer provides user data

1420
Host computer initiates transmission carrying the user data to the UE

1430
UE receives the user data

END

Fig. 14

**EP 4 193 763 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013374032 A1
- US 2019394739 A1
- CA 3093949 A1